(19) Europäisches Patentamt / European Patent Office / Office européen des brevets

(11) **EP 4 392 773 B1**

(12) **EUROPEAN PATENT SPECIFICATION**

(45) Date of publication and mention
of the grant of the patent:
**29.01.2025 Bulletin 2025/05**

(21) Application number: **22836317.2**

(22) Date of filing: **21.12.2022**

(51) International Patent Classification (IPC):
**G01N 29/024** *(2006.01)*    **G01N 13/02** *(2006.01)*
**G01N 29/036** *(2006.01)*    **G01N 29/24** *(2006.01)*

(52) Cooperative Patent Classification (CPC):
**G01N 29/024; G01N 13/02; G01N 29/036;
G01N 29/2418;** G01N 2291/02809;
G01N 2291/02818; G01N 2291/0423

(86) International application number:
**PCT/GB2022/053350**

(87) International publication number:
**WO 2023/118870 (29.06.2023 Gazette 2023/26)**

(54) **ANALYTICAL METHOD, CORRESPONDING CONTROLLER AND COMPUTER PROGRAM PRODUCT**

ANALYTISCHES VERFAHREN, ENTSPRECHENDER CONTROLLER UND COMPUTERPROGRAMMPRODUKT

PROCÉDÉ ET APPAREIL D'ANALYSE, CONTRÔLEUR CORRESPONDANT ET PRODUIT DE PROGRAMME INFORMATIQUE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **21.12.2021 GB 202118692**

(43) Date of publication of application:
**03.07.2024 Bulletin 2024/27**

(60) Divisional application:
**24216266.7**

(73) Proprietor: **Apoha Limited
London NW6 6RJ (GB)**

(72) Inventor: **SHRIVASTAVA, Shamit
London W10 5JJ (GB)**

(74) Representative: **Leach, Sean Adam
Mathys & Squire
The Shard
32 London Bridge Street
London SE1 9SG (GB)**

(56) References cited:
**WO-A1-2019/234437     CN-A- 107 063 923
CN-A- 110 749 528**

• **SHRIVASTAVA SHAMIT ET AL: "Opto-Mechanical
Coupling in Interfaces under Static and
Propagative Conditions and Its Biological
Implications", PLOS ONE, 1 January 2013
(2013-01-01), United States, pages e67524 -
e67524, XP055936329, Retrieved from the
Internet <URL:https://journals.plos.
org/plosone/article/file?id=10.1371/journal.
pone.0067524&type=printable> [retrieved on
20220628], DOI: 10.1371/journal.pone.0067524**

## Description

## Field of disclosure

The present disclosure relates to a method and a controller for characterising stimuli applied to a liquid system, more particularly the disclosure is directed to an analytical method using surface waves to determine a property of a test substance and an analytical apparatus for performing an analytical method using surface waves to determine a property of a test substance.

## Background

Apparatus used for the physical testing of substances and the measurement of physical parameters, such as the chemical composition of substances and/or the properties of molecules such as proteins, lipids, and formulations comprising these and other such molecules (e.g. as mixtures) represents a very significant technical challenge. Prior methods of analysis such as chromatography, mass spectrometry and other types of analysis have severe shortcomings and are able only to represent certain aspects of the test substances such as their mass to charge or the speed with which they move through a chromatography column.

Patent application CN 110 749 528 A discloses an analytical method using surface waves on a liquid system for determining a property of a test substance. $

The present disclosure relates to apparatus and methods which are able to characterise a stimulus, such as a test substance, in ways which have not previously been possible and so offer significant technical advantages in the analysis of such substances and in other technical fields.

## Summary

Aspects of the invention are set out in the independent claims and optional features are set out in the dependent claims. Aspects of the disclosure may be provided in conjunction with each other, and features of one aspect may be applied to other aspects.

An aspect of the disclosure provides an analytical method using surface waves on a liquid system for determining a property of a test substance, the analytical method comprising: obtaining a reference indication, wherein the reference indication is indicative of a reference surface wave generated at a surface of the liquid system by contacting the surface of a liquid system with the reference substance; obtaining a test indication, wherein the test indication is indicative of a test surface wave generated at the surface of the liquid system by contacting the surface with the test substance; determining a property of the test substance based on: the reference indication; and, the test indication.

The analytical methods described herein may permit identification of a property of a substance which may not be possible using conventional analytical methods. For example, the method may permit a degree of accuracy of the property of the substance which is unattainable using an identical quantity of the substance in a conventional method. For example, the method may permit a determination of the property of the substance which would be unattainable using an identical quantity of the substance in a conventional method. Embodiments may enable measurement of multiple thermodynamic properties of a test substance that, in prior measurement approaches, typically require measurements by multiple independent techniques.

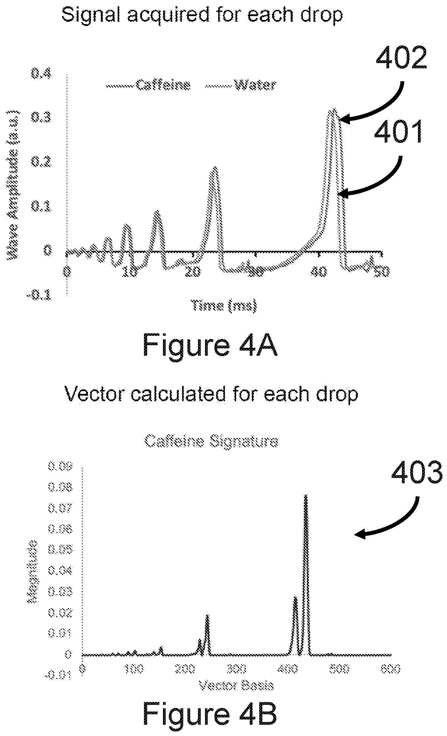

An advantage of basing the determination of a property of a test substance on both the reference indication and the test indication is that the reference indication acts to calibrate the system. In more detail, a stored difference measure may have the same form (e.g. characteristic peaks if represented as a curve as in Figure 4B or vector direction if represented algebraically as a vector) as the experimental difference measure but a different magnitude. The form of the difference measures is invariable under scaling. That is, if the difference measures are represented as vectors, the direction of a difference measure for a given pair of substances is unique to that pair of substances.

Obtaining the reference indication may comprise receiving the reference indication as an electronic signal. Obtaining the test indication may comprise receiving the test indication as an electronic signal.

Obtaining the reference indication may comprise contacting the surface of the liquid system with the reference substance. The generated reference wave may be measured (e.g. using a detector) to obtain a reference measurement. The reference indication may be generated (e.g. by a computer terminal) based on the reference measurement (or alternatively the reference indication and the reference measurement may be identical). Obtaining the test indication may comprise contacting the surface of the liquid system with the test substance. The generated test wave may be measured (e.g. using a detector) to obtain a test measurement. The test indication may be generated (e.g. by a computer terminal) based on the test measurement (or alternatively the test indication and the test measurement may be identical).

Determining a property of the test substance may be based on: the reference indication; and, the test indication comprises: determining a difference measure between the reference indication and the test indication.

The reference indication may serve to calibrate the test indication. The difference measure may comprise a Euclidean distance metric. The difference measure may comprise a vector quantity. The difference measure may be determined by a subtraction between the reference indication and the test indication.

In examples, the surface can be contacted with a plurality of droplets simultaneously to thereby generate spatiotemporal wave patterns. An indication of the generated spatiotemporal wave pattern may be obtained. The obtained indication may be a concatenated vectors. High throughput analysis of multiple test substances can be performed simultaneously using the obtained indication.

A difference measure can be generated by contacting the surface of a liquid system simultaneously with a reference substance and a test substance, for example at different locations on the surface of the liquid system. The generated waves combine (e.g. interfere) to provide a combined wave. A difference measure may be generated based on a measurement of the combined wave.

The liquid system may comprise a bulk liquid phase. In examples, the properties of the bulk liquid phase may be selected to determine the properties of the surface waves generated by contacting a substance (e.g. a reference substance and/or a test substance) on the surface of the liquid system. For example, increasing the viscosity of the bulk liquid phase may change the speed of surface waves in the thin film.

The thin film may be a monolayer. For example, the monolayer may comprise a lipid thin film. The bulk liquid phase may comprise an aqueous phase. In examples, the lipid and/or the bulk liquid phase may be selected for determination of a particular property of a substance which generates a surface wave on the surface e.g. the lipid is selected based on the specific property of a test substance (e.g. viscosity) which a user wishes to determine using the analytical method.

The flowing liquid system may comprise material of the thin film dispersed in the bulk liquid phase, for example where the thin film is a lipid the lipid may also be dispersed in the bulk liquid phase. The lipid thin film may comprise a lipid which is the same as the lipid dispersed in the bulk liquid phase. The dispersed film material and the material in the thin film may be the same material or type of material, for example the lipid in the monolayer and the dispersed lipid may be the same species of lipid.

Advantageously, providing film material, such as a lipid, dispersed in the bulk liquid phase permits an equilibrium to be established between the film material dispersed in the bulk liquid phase and that which is in the thin film, e.g. the lipid monolayer. Control of this equilibrium provides a way of controlling properties of the film.

The liquid system may comprise a dispersion of solid particles, such as a network of particles dispersed in the liquid, which may provide a colloid for example a gel. For example the bulk liquid phase and/or any thin film at its surface may comprise such a dispersion. The bulk liquid phase and/or any thin film at its surface may be viscoelastic.

The use of flowing liquid systems as described herein may provide a thin film (e.g. lipid monolayer) which is refreshed after being contacted with a droplet of analyte before subsequent contact between another droplet of a substance and the surface. The presence of equilibrium between bulk phase and the thin film may provide enhanced stability in the properties of the film and hence reproducibility between one contact event and the next.

The liquid system need not flow. Static systems can also be used. For example, a liquid system may be provided wherein the liquid system comprises a bulk liquid phase comprising an aqueous solution; a lipid, protein, or other molecule dispersed in the bulk liquid phase; and, a lipid thin film carried at the surface of the bulk liquid phase. A thin film comprising, or consisting essentially of, a protein or other molecule may be used in place of the lipid thin film.

An analytical method according to the present disclosure comprises: contacting the thin film of the liquid system with a first substance, wherein the thin film has an initial state, thereby to generate a first surface wave on the flowing liquid system; determining the property of the first substance based on a parameter of the first surface wave; controlling an equilibrium between the lipid thin film and the lipid dispersed in the bulk liquid phase to thereby return the lipid thin film to the initial state; subsequently, contacting the thin film of the liquid system with the a second substance, wherein the thin film has an initial state, thereby to generate a second surface wave on the flowing liquid system; determining the property of the second substance based on a parameter of the second surface wave.

Advantageously, a lipid monolayer may be provided which is identical (e.g. the same chemical composition) for a plurality of instances of contacting the surface with a droplet (e.g. of a test substance and/or a reference substance) without the need to provide a flowing liquid system. As throughout the disclosure, the lipid monolayer may be replaced with a monolayer comprising proteins or other molecules according to some aspects.

Additionally, a plurality of lipid monolayers (or monolayers comprising proteins or other molecules) or multiple bulk liquids may be provided for a plurality of identical test substances to provide a more comprehensive test across multiple features of the identical test substances, resulting in a more comprehensive reference data set. For example, each combination of the identical test substances applied to a plurality of bulk liquids may generate unique indications indicative of multiple features of the identical test substances. The unique indications may then be compiled into a reference for the test substance comprising multiple indications, which may enable a higher level of complexity and richer data as a reference for future tests.

The property of the test substance which is to be determined may comprise at least one of: (1) the partition coefficient, wherein the partition coefficient is the ratio of the concentration of the test substance and the bulk liquid phase; (2) the viscosity of the test substance; (3) the charge of the test substance; (4) the solubility of the test substance in the liquid system; (5) the chemical potential per mol of the test substance; (6) the enthalpy of interactions between the test substance and the liquid system; (7) the identity of the test substance; (8) the enthalpy of transition for conformational degrees of freedom of the test substance; (9)the hydrophobicity of the test substance.

The analytical method may further comprise performing high-performance liquid chromatography, HPLC, on an analyte comprising a plurality of constituents, wherein one of the constituents is the test substance to thereby: obtain an HPLC parameter associated with the test substance; and, separate the test substance from the other constituents of the analyte; contacting the surface of the liquid system with the test substance separated from the other constituents of the analyte to generate a test surface wave on the liquid system; and, determining a property of the test substance based on the HPLC parameter and the test indication.

Advantageously, more information about the test substance may be collected thereby permitting a more accurate determination of a property of the test substance.

An aspect of the disclosure provides controller configured to: obtain a reference indication, wherein the reference indication is indicative of a reference surface wave generated at a surface of the liquid system by contacting the surface of a liquid system with the reference substance; obtain a test indication, wherein the test indication is indicative of a test surface wave generated at the surface of the liquid system by contacting the surface with the test substance; determine a property of the test substance based on: the reference indication; and, the test indication.

In examples, the controller may be embodied by a computer terminal and a storage device wherein the computer terminal and the storage device and communicatively coupled.

An aspect of the disclosure provides computer program product configured to program a controller to perform any of the methods described herein.

For example, the computer program product is software which is installable on a controller (e.g. wherein the controller is embodied by a computer terminal and a storage device).

The method may comprise generating a chromatagram from a liquid eluate provided from a chromatography column (e.g. an HPLC column). Typically, the eluate comprises a solvent in which the analyte material may be present at a given concentration. Examples of chromatograms include data and/or signals which provide a two-dimensional plot with the ordinate axis giving analyte concentration in terms of the detector response, and the abscissa represents the time.

The method may comprise contacting the surface with a liquid eluate (e.g. a test substance), wherein the eluate exits a chromatography column (e.g. an HPLC column) to thereby contact the surface of the liquid system to thereby generate a surface wave in the surface of the liquid system.

A conduit may provide liquid eluate from the chromatography column to the liquid system e.g. an outlet of the conduit may be disposed above and/or adjacent to the surface of the liquid system.

The method may comprise determining, based on the surface wave, an indication of an analyte present in the eluate; and, generating the chromatagram based on said indication.

An aspect of the disclosure provides a method of adding an entry to a stored difference measure database, the method comprising: optionally controlling a liquid system to provide a particular equilibrium between a lipid thin film and a lipid dispersed in a bulk liquid phase; contacting the surface of the liquid system with a first baseline substance thereby to generate a surface wave on the liquid system; obtaining a first baseline indication indicative of a parameter of the first baseline surface wave generated at the surface of the liquid system; assigning a property of the first baseline substance to the first baseline substance indication; optionally controlling the equilibrium between the lipid thin film and the lipid dispersed in the bulk liquid phase so as to return the liquid system to the particular equilibrium which applied when the first baseline substance was contacted to the surface; contacting the surface of the liquid system with a second baseline substance thereby to generate a surface wave on the liquid system; obtaining a second baseline indication indicative of a parameter of the second baseline surface wave generated at the surface of the liquid system; assigning a property of the second baseline substance to the second baseline substance indication; generating an entry of the stored difference measure database wherein the entry comprises: a difference measure based on the first baseline indication and the second baseline indication; and, a label based on both the assigned property of the first baseline substance and the assigned property of the second baseline substance.

In examples, controlling an equilibrium between the lipid thin film and the lipid dispersed in the bulk liquid phase may comprise: maintaining a thin film parameter at a constant value, wherein the thin film parameter comprises any of:

(i) the surface pressure of the lipid thin film ($\pi$);
(ii) the surface tension of the lipid thin film ($\gamma$);
(iii) the surface concentration of the lipid thin film ($\Gamma$);
(iv) the surface potential of the lipid thin film ($\Delta V$);
(v) the surface elastic modulus of the lipid thin film (E);
(vi) capacitance of the thin film;
(vii) heat capacity of the thin film.

In other words, the methods described herein may comprise controlling parameters of the thin film to test for the differences between the effect of contacting the surface with a reference substance and the effect of contact with a test substance. The circumstances of contact (e.g. the mechanical parameters of the contact event, such as the size and mass of any droplet and its velocity at contact) may also be controlled. In this way, any differences between surface waves generated by contact between the surface of the liquid system and, on the one hand the test substance and on the other hand the refence substance can be attributed to differences in the properties of the two substances themselves and not from differences in the surface of the liquid system.

The above parameters used in controlling equilibrium between the lipid thin film and the lipid dispersed in the bulk liquid phase may be measured by optical techniques such as ellipsometry which may be sensitive to the orientation of molecules at the surface. Such approaches are particularly useful in measurement of surface potential.

The flowing liquid system may be in a state of laminar flow. Advantageously, the laminar flow systems may require a lesser amount of computational work (e.g. work a process needs to do) to determine a parameter of a surface wave generated on the liquid system under laminar flow in comparison to the computational work required to determine a parameter of a surface wave generated on a liquid system under a non-laminar flow regime (e.g. under turbulent flow).

Determining a parameter of the surface wave generated by the contacting the surface of the flowing liquid system with the test substance may comprise: detecting, in a region R of the liquid system, a parameter of the surface wave generated by contacting the surface of the flowing liquid system with the test substance, wherein the region R is disposed either: upstream of the point on the surface of the flowing liquid system at which the surface is contacted with the test substance; or laterally with regards to the direction of flow from the point on the surface of the flowing liquid system at which the surface is contacted with the test substance; or downstream of the point on the surface of the flowing liquid system at which the surface is contacted with the test substance.

Advantageously, in upstream and lateral arrangements waves generated at the position of the contacting means travel through an pure portion of the surface of the flowing liquid system to the region R where parameters of the wave are detected. In this way, differences between surface waves generated by contacting two different substances with the surface of the liquid system can be attributed to differences between the properties of the two substances themselves (e.g. different viscosities) and not from differences in the surface of the liquid system and, for example, the composition of the surface of the flowing liquid system (e.g. contamination of the surface from previous instances of contacting the surface with a test substance.

A pure portion of the surface refers to a portion of the surface which does not comprise substances from previous contacting of the surface by the contacting means.

Downstream embodiments may provide sensitivity to self-interaction via propagation of the wave generated by contacting the surface with a test substance through a region of the surface in which the substance is already present due to a prior contact. Upstream and/or lateral, and/or down-stream measurement may be used together -e.g. the data from such measurements may be combined for analysis such as by being concatenated or otherwise used in combination.

In examples, an analytical method may be performed comprising: contacting the surface of the flowing liquid system with the test substance thereby to generate a surface wave on the flowing liquid system; determining the property of the test substance based on a parameter of the surface wave.

Advantageously, a method of determining the property of the test substance based on a parameter of the surface wave may be provided.

Determining the property of the test substance may be based on a plurality of parameters of the surface wave.

The surface wave may comprise a longitudinal capillary wave (e.g. a Lucassen wave). In examples, the surface wave may comprise any of: a Rayleigh wave; a gravity wave; a capillary wave; and, a Lucassen wave. In practice, the different types of waves are coupled (e.g. generation of a Lucassen wave generates a capillary waves etc.) and, therefore, it may be difficultto isolate a parameter of a generated wave and determine it was generated solely by, for example, a Lucassen wave (e.g. the parameter may be a result of all of the fourwave types). However, there is no need to isolate parameters associated with a single type of wave (e.g. Lucassen wave) for the method and apparatus described here to work. For example, the present disclosure is concerned with identifying properties of a test substance based on parameter(s) of a generated surface wave (which may comprise all four types set out above superposed upon one another).

An aspect of the disclosure provides an analytical apparatus for determining a property of a test substance using surface waves comprising: a trough configured to hold a liquid system; a flow provider configured to provide a flow of the liquid system from an upstream end of the trough to a downstream end of the trough to thereby provide a flowing liquid system. Advantageously, a property of substance may be determined using the analytical apparatus.

In examples, the analytical apparatus may permit identification of a property of a substance which may not be possible using conventional analytical methods and apparatus. For example, the apparatus may permit a degree of accuracy of a property of the substance which is unattainable using an identical quantity of the substance in a conventional apparatus. For example, the apparatus may permit a determination of a property of the substance which would be unattainable using an identical quantity of the substance in a conventional apparatus.

The flow provider may be configured to provide a laminar flow of the liquid system. Advantageously, the laminar flow systems may require a lesser amount of computational work (e.g. work a process needs to do) to determine a parameter of a surface wave generated on the liquid system under laminar flow in comparison to the computational work required to determine a parameter of a surface wave generated on a liquid system under a non-laminar flow regime (e.g. under turbulent flow).

The detector may be configured to detect a parameter of a surface wave generated by contacting the surface of the flowing liquid system with a test substance.

A contacting means may be provided configured to contact the surface of the flowing liquid system with the test substance. Advantageously, a contacting means may permit reproducible measurements to be obtained e.g. by contacting a similar quantity of a substance in a similar manner onto the surface. Therefore, all variables other than the property of the substance may be controlled. As a result, direct comparison of parameters of different surface waves generated by contacting the surface with different substances may be permitted.

The contacting means may be configured to: generate a droplet of the test substance at an outlet of the contacting means; and, move the outlet of the outlet of the contacting means toward the surface of the flowing liquid system to thereby bring into contact the droplet of the test substance and the surface.

The contacting means may be configured to: generate a droplet of the test substance at an outlet of the contacting means; wherein, in use, the outlet of the contacting means is spaced from the surface of the flowing liquid system so that, in the event that a droplet is generated at the outlet, part of the droplet contacts the surface.

The contacting means may permit a droplet of a test substance (or in examples, a reference substance) to be brought into contact with the surface of the flowing liquid system. Advantageously, contacting the surface with a droplet rather than dropping the surface can avoid disadvantages associated with dropping the droplet on the surface. A disadvantage with dropping a droplet onto the surface of the liquid system (compared to contacting a surface of a liquid system with a droplet) is that the dropped droplet may rebound thereby generating a plurality of waves which may require a greater amount of computational work to determine parameter of the generated waves and/or a property of the dropped substance which generates the wave.

The trough is configured to hold a liquid system comprising: a bulk liquid phase; a lipid dispersed in the bulk liquid phase; and, a lipid thin film carried at the surface of the bulk liquid phase; and, the analytical apparatus comprises: an equilibrium control means configured to control an equilibrium between the lipid thin film and the lipid disposed in the bulk liquid phase.

The parameter may be referred to as an indication. For example, a parameter associated with a wave generated by a test substance (e.g. a test wave) may be indicative of the test substance and may be referred to as an indication (e.g. a test indication). Similarly, a parameter associated with a wave generated by a reference substance (e.g. a reference wave) may be indicative of a the reference substance (e.g. a reference indication).

Obtaining the reference indication may comprise contacting the surface of the liquid system with the reference substance; and/or, retrieving the reference indication from a database. Obtaining the test indication may comprise contacting the surface of the test system with the test substance.

Reference indications and test indications may be treated as vector quantities (e.g. feature vectors).

The property of the test substance may comprise at least one of:

(1) the partition coefficient, wherein the partition coefficient is the ratio of the concentration of the test substance in the lipid phase and aqueous phase;
(2) the viscosity of the test substance;
(3) the charge of the test substance;
(4) the solubility of the test substance in the liquid system;
(5) the chemical potential per mol of the test substance;
(6) the enthalpy of interactions between the test substance and the liquid system;
(7) the identity of the test substance;
(8) the enthalpy of transition for conformational degrees of freedom of the test substance;
(9) the hydrophobicity of the test substance;
(10) the hydrodynamic radius of the test substance;
(11) the interfacial free energy of the test substance;
(12) the thermodynamic susceptibilities of the test substance.

The analytical method may comprise: performing high-performance liquid chromatography, HPLC, on an analyte comprising a plurality of constituents, wherein one of the constituents is the test substance to thereby: obtain an HPLC parameter associated with the test substance; and, separate the test substance from the other constituents of the analyte; contacting the surface of the flowing liquid system with the test substance separated from the other constituents of the analyte to generate a test surface wave on the flowing liquid system; and, determining a property of the test substance based on the HPLC parameter and the test indication.

Although examples herein refer to the liquid system moving under a laminar flow regime, a turbulent flow regime may be used. However, turbulent flow regimes may require a greater amount of computational work (e.g. work a processor needs to do) to determine parameters of surface waves generated on the flowing liquid system.

In examples (e.g. wherein the liquid system does not have time to equilibrate), the method may comprise providing a plurality of droplets (e.g. of reference substance or test substance) in sequence to the surface of the flowing liquid system without performing an intermediate step of controlling an equilibrium between the lipid thin film and the lipid dispersed in the bulk liquid phase. Advantageously, the total quantity of the reference substance or test substance which contacts the surface may be increased which may increase the sensitivity of the apparatus.

In examples, the speed of the flow of the liquid may be reduced thereby causing accumulation of test substance to permit measurement of the test substance (e.g. a plurality of test droplets may be contacted onto the surface wherein each test droplet comprises a small amount of the test substance and providing a plurality of droplets to the surface thereby increases the total amount of the test substance on the surface of the liquid system). For example, if the surface of the liquid system (e.g. a lipid monolayer) is flowing at speed V under a continuous stream of droplets of N droplets per second, then the deposition rate of droplets onto the surface is related to N/V per second. The speed of the surface of the liquid system may be reduced to V/2 thereby changing the deposition rate to 2N/V, thereby comparatively increasing the sensitivity of the method.

In some examples, the speed of the flow of liquid may be stopped to thereby increase the sensitivity of the method.

In examples, the equilibrium control means may comprise a heater configured to heat the liquid system disposed in the trough.

The equilibrium control means may comprise a liquid system dispenser configured to dispense liquid into the trough. In examples, the equilibrium control means may comprise a secondary liquid system dispenser configured to dispense a liquid into the trough. For example, the secondary liquid system dispenser may be configured to dispense a liquid which is different from at least one of the aqueous phase and the lipid monolayer. For example, the secondary liquid system dispenser may be configured to dispense an acid into the trough to thereby adjust the pH of a liquid system disposed in the trough.

In examples, the equilibrium control means comprises a surface area changing means configured to change the surface area of a lipid thin film.

An aspect of the disclosure provides use of an analytical apparatus described herein to perform any of the analytical methods described herein.

The state of the monolayer may depends on: temperature, pH, lipid-type, ion or protein adsorption to the monolayer, solvent incorporation of the monolayer, isothermal compressibility. In examples, any of the pH, ions adsorption and/or protein adsorption may be controlled by changing the bulk liquid phase (e.g. referred to as a fluid buffer) beneath the lipid monolayer. In examples, any of the pH, ions adsorption and/or protein adsorption may not be controlled directly but rather these parameters of the state of the monolayer be observed and then accounted for in calculations to determine a property of the test substance.

The determined the property of the test substance may be used to identify the test substance (e.g. by comparing the determined the property with a table of compounds and their associated that particular property).

The initial thin film parameters may not be restored and the surface may be contacted with the same test substance a plurality of times. Advantageously, a greater quantity of the test substance is contacted with the surface which may increase the magnitude of a parameter of a wave generated by contacting the test substance with the surface. In this manner, the accuracy of the determine the property of the substance may be increased (in comparison to using a single droplet of the test substance).

The reference indication may be a time series of measurement obtained from a location on the surface e.g. in response to contacting the surface with a reference substance. The test indication may be a time series of the same measurement obtained from a corresponding location on the surface e.g. in response to contacting the surface with a test substance. The corresponding location from which the test measurement is obtained may be equivalent to the location from which the reference measurement was obtained. For example, they may be obtained from the same location or from a location at the same distance from the contact point.

The present disclosure provides methods and systems for determining a property of a test substance by encoding information in a medium . The medium may be a liquid such as a gel, or any other viscoelastic medium. It will be appreciated in the context of the present disclosure that viscoelastic liquids such as gels, or any other viscoelastic medium are typically non-solid. In some examples, a non-solid medium is not a solid or a gas. It will be appreciated in the context of the present disclosure that a liquid may comprise a dispersion of solid particles, such as a network of particles dispersed in the liquid, which may provide a colloid for example a gel. For example, the bulk liquid phase and/or any thin film at its surface may comprise such a dispersion. The bulk liquid phase and/or any thin film at its surface may be viscoelastic.

According to some embodiments, a method for determining a property of a test substance is provided comprising: (a) encoding the test substance as a wave through a non-solid medium by chemical excitation; (b) processing the wave through the non-solid medium, wherein the processing modifies one or more features of the wave into one or more processed wave features according to one or more conditions of the non-solid medium; (c) decoding the one or more processed wave features to obtain a test indication; and (d) comparing the test indication to a reference indication to determine a property of the test substance.

Apparatuses used for the physical testing of substances and the measurement of physical parameters, such as the chemical composition of substances and/or the properties of molecules such as proteins and lipids, represents a very significant technical challenge. Prior methods of analysis such as chromatography, mass spectrometry and other types of analysis have severe shortcomings and may represent certain aspects of the test substances such as their mass to charge or the speed with which they move through a chromatography column.

The present disclosure relates to apparatus and methods which are able to characterise a stimulus, such as a test substance, in ways which have not previously been possible and so offer significant technical advantages in the analysis of such substances and in other technical fields.

## Drawings

Embodiments of the disclosure will now be described, by way of example only, with reference to the accompanying drawings, in which:

Figure 1A illustrates a side view of an analytical apparatus for performing an analytical method;
Figure 1B illustrates a cross-sectional view along plane B-B of the analytical apparatus shown in Figure 1A;
Figure 1C illustrates a cross-sectional view along plane C-C of the analytical apparatus shown in Figure 1A;
Figure 2A illustrates a schematic view of an analytical system for performing the analytical method depicted in Figure 3;
Figure 2B illustrates a schematic view of the first entry of the stored difference measure database.
Figure 3 illustrates a flowchart depicting an analytical method of determining a property of a test substance;
Figure 4A illustrates a graph of wave position against time and a reference measurement 401 and a test measurement 402;
Figure 4B illustrates a graph of vector magnitude against vector basis with a difference measure 403;
Figure 5 illustrates flowchart depicting a method of adding an entry to the stored difference measure database;
Figure 6 illustrates a schematic view of an apparatus according to the present disclosure. Like reference signs between the Figures illustrate like elements.

## Description

The present disclosure relates to methods and apparatus for determining a property of a test substance based on parameters of a surface wave generated in a liquid system by contacting a surface of the liquid system with the test substance. Methods of contacting the surface and controlling the surface are also disclosed.

The surface of the liquid system forms a boundary or interface with any adjacent medium, typically air or another gas. The liquid system generally comprises a bulk liquid, which may be aqueous, and a thin film such as a lipid monolayer carried at a surface of the bulk liquid system. The interface between the bulk liquid and the lipid monolayer may be referred to as a lipid interface.

The methods described herein can be performed using a Langmuir trough holding such a liquid system. A contacting means can be used to cause contact between a test substance and the surface of the liquid system, e.g. the external surface of the thin film. In addition to any mechanical wave generated by the contact, an electromechanical interaction between the substance and the lipid monolayer gives rise to additional waves such as Lucassen waves on the surface of the liquid system. A detector is used to measure a parameter of this surface wave. The measured parameter is used to generate an indication of the surface wave. The indication is compared to stored indications (or difference measures which are based on indications) to determine a property of the test substance. The stored indications (or difference measures) may populate a database of stored indications wherein each entry of the database comprises a stored indication (or difference measure) and an associated property of the substance(s) used to generate said stored indication (or said difference measure).

The liquid system may comprise a dispersion of solid particles, such as a network of particles dispersed in the liquid, which may provide a colloid for example a gel. For example, the bulk liquid phase and/or any thin film at its surface may comprise such a dispersion. The bulk liquid phase and/or any thin film at its surface may be viscoelastic.

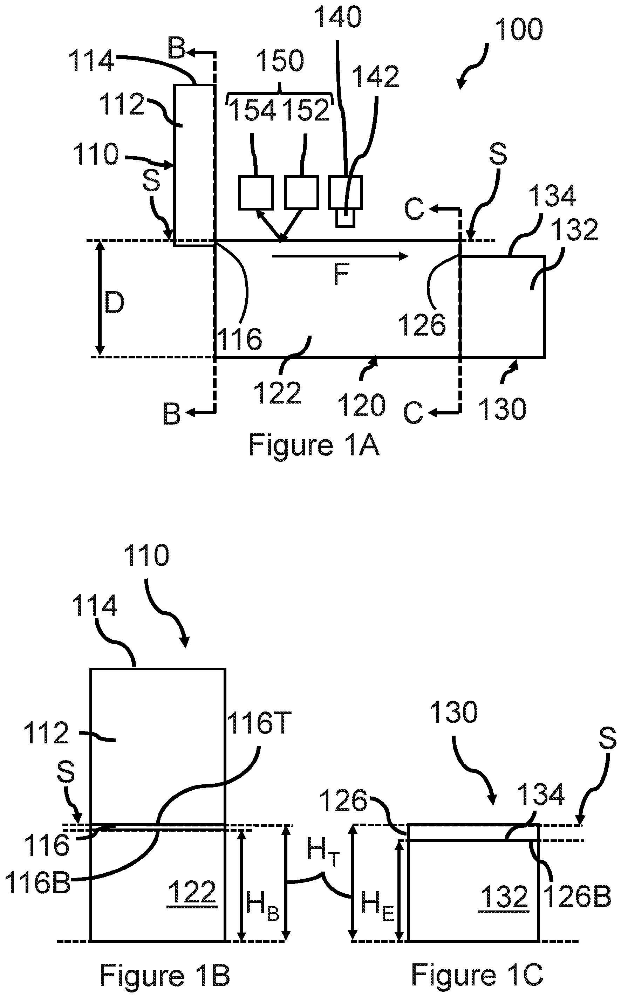

Figure 1A illustrates a side view of an analytical apparatus for performing an analytical method, for example at least one of the analytical methods depicted in Figures 7, 8 or 10. Figure 1B illustrates a cross-sectional view of plane B-B of the analytical apparatus shown in Figure 1A. Figure 1C illustrates a cross-sectional view of plane C-C of the analytical apparatus shown in Figure 1A.

The analytical apparatus 100 comprises: a liquid system dispenser 110; a trough 120; a liquid system receiver 130; a contacting means 140; a detector 150.

The liquid system dispenser 110 comprises: a liquid system dispenser vessel 112; a liquid system dispenser inlet 114; and, a liquid system dispenser outlet 116. Liquid can pass through the liquid system dispenser inlet 114 to enter the liquid system dispenser vessel 112. Liquid can exit the liquid system dispenser vessel 112 through the liquid system dispenser outlet 116. The liquid system dispenser outlet 116 comprises a slit disposed between a slit bottom edge 116B and a slit top edge 116T. The liquid system dispenser inlet 114 is arranged at a top side of the liquid system dispenser. The liquid system dispenser outlet 116 is disposed closer to a bottom side than the top side of the liquid system dispenser 110. The liquid system dispenser outlet 116 is arranged in fluid communication with the trough 120.

In some examples, the liquid system dispenser inlet may be disposed in the bottom side of the liquid system dispenser

The trough 120 comprises a bottom and sides which define an interior volume 122. The interior volume 122 of the trough 120 is configured to hold a liquid (e.g. a liquid system such as any of those described herein). The trough has a trough outlet 126. The trough outlet is configured to allow the liquid (e.g. a liquid system) held in the trough to exit the trough. The interior volume 122 is arranged in fluid communication with the trough outlet 126. The trough outlet 126 is a portion of the wall of the trough with an edge 126E which is shorter in height than the other walls of the trough. Liquid exits the interior volume 122 when the depth of the liquid exceeds the height of the edge 126E. The trough outlet 126 is disposed at a height $H_\varepsilon$ from the bottom of the trough 120. The other walls of the trough have a height greater than the height of the trough outlet 126. The trough outlet 126 is arranged in fluid communication with the liquid system receiver 130

The liquid system receiver 130 is a receptacle for receiving liquid system which exits the trough. In examples, the liquid system receiver may be omitted or may be separate from the apparatus comprising the liquid system dispenser and the trough.

The contacting means 140 comprises a contacting means outlet 142.

The contacting means 140 is disposed above the trough 120. The contacting means 140 can be moved toward the trough 120 to thereby contact a surface of liquid in the trough with a substance carried by the contacting means. Put in other words, the contacting means 140 is disposed above the trough 120 (e.g. when the system 100 is disposed on a flat horizontal surface for use). In other words, the contacting means 140 is disposed in a direction perpendicular to a surface of a liquid system held in the trough 120. The contacting means is configured to permit the contacting means to move a droplet of a substance (e.g. a test substance and/or a reference substance) into contact with a surface of a liquid system disposed in the trough.

The detector 150 comprises: a light source 152; and, a light detector 154. The detector 150 is configured to detect a parameter of a surface wave of a liquid system disposed in the trough.

The light source 152 is arranged to direct light onto a surface of a liquid system held in the trough 120. The intensity of the light reflected at a given location on the surface of the liquid system depends on the polarization and angle of incidence at the surface and on the density and orientation of molecules at the surface (e.g. lipid molecules), which determine the dielectric properties of the surface. For example, the magnitude of the reflected light at a given point on the surface for a fixed angle of incidence and polarisation is increased when the lipid density at the given point is greater and the magnitude is reduced when the lipid density is comparatively lesser at the given point. The light detector 154 is arranged to receive reflected light from the surface of a liquid system held in the trough 120 (e.g. wherein the reflected light is generated by light emitted from the light source 152 onto the surface of the liquid system). The light source 152 and the light detector 154 are disposed above the trough 120. The light source 152 is configured to emit light e.g. the light source is configured to emit light onto a surface of a liquid system held in the trough. The light source 152 is configured to emit polarized light. The light detector 154 is configured to detect light e.g. the light detector is configured to detect reflected light from a surface of a liquid system held in the trough.

The optical detector 150 is configured to determine the parameters of the wave (e.g. any of position, wavelength, frequency or wave speed).

The liquid system dispenser 110 is configured to dispense a liquid system into the trough 120. The liquid system dispenser 110 is configured to hold a liquid system in the liquid system dispenser vessel 112. The liquid system dispenser vessel 112 is configured to receive liquid system via the liquid system dispenser inlet 114. The liquid system dispenser vessel 112 is configured to dispense liquid system via the liquid system dispenser outlet 116.

The trough may hold a liquid system and the liquid system dispenser may hold and dispense the same liquid system. In such examples, the liquid dispenser may serve to replenish the liquid system which is exits the trough and flows into the liquid system receiver.

The trough may be a Langmuir trough. The trough has a width e.g. the dimension perpendicular to a flow direction (represented by arrow F) of the flowing liquid system. The width is selected to be greater than the wavelength of surface waves generated by contacting a substance with the surface of a liquid system disposed in the interior volume trough. Such an arrangement may avoid undesired wave mechanics (e.g. diffraction; reflection; self-interference) which might complicate the generated surface waves. Complicating the generated surface waves can be undesirable because doing so may increase the computational work required to determine one or more parameters of the surface waves and/or to determine a property of the substance which generates the wave.

In examples, the wavelengths of surface waves generated by contacting a substance with the surface of a liquid system disposed in the trough vessel will be on the order of a millimetre ($10^{-3}$ m) to the order of a centimetre ($10^{-2}$ m). Advantageously, a trough vessel with a width on the order of decimetres ($10^{-1}$ m) may be provided to thereby negate or avoid the aforementioned problems but without unnecessarily increasing the size of the analytical apparatus.

The contacting means 140 is configured to contact a surface of a liquid system held in trough 120 with a droplet of a substance of interest.

The contacting means may operate in a different manner. For example, the contacting means may be configured to: form a droplet of a substance (e.g. a reference substance and/or a test substance) at the contacting means outlet; and, move the contacting means outlet toward the surface of the flowing liquid system to thereby bring into contact the droplet and the surface.

In examples, such as the arrangement illustrated in Figures 4A to 4D, the contacting means is configured to: form a droplet of a substance (e.g. a reference substance and/or a test substance) at an outlet of the contacting means; wherein, in use, the outlet of the contacting means is spaced from the surface of the flowing liquid system so that, in the event that a droplet is formed at the outlet, part of the droplet contacts the surface.

The apparatus is configured so that the liquid system flows from an upstream end (e.g. where the liquid system dispenser is disposed) to a downstream end (e.g. where the liquid system receiver is disposed). The detector 150 is disposed upstream of the contacting means 140 e.g. a region R of the liquid system where the detector detects a parameter of a surface wave generated by contacting a surface of the liquid system with a test substance. Advantageously, waves generated at the position of the contacting means travel through a pure portion of the surface of the flowing liquid system to the region R where parameters of the wave are detected. In this way, the only differences between surface waves generated by contacting two different substances with the surface of the liquid system will arise from differences in the two substances (e.g. different viscosities) and not from differences in the surface of the liquid system and, for example, the composition of the surface of the flowing liquid system.

A pure portion of the surface refers to a portion of the surface which does not comprise an substances from previous contacting of the surface by the contacting means.

In examples, the detector may be disposed laterally with regards to the direction of flow from the point on the surface of the flowing liquid system at which the surface is contacted with the test substance (e.g. the region R may be disposed laterally to the direction of flow).

When the liquid system comprises a lipid monolayer, a generated wave in the lipid monolayer results in variations of the charge density on the surface which effect the polarisation of the reflected light. The effect on the polarisation of the reflected light may be indicative of a property of the substance which generates the surface wave (e.g. the amount of charge of the substance). In examples, the polarization of light is a secondary sensing mechanism. The point on the lipid monolayer where the light polarization is being measured is spatially removed (e.g. spatially distant) from the point on the surface where the droplet is deposited. The surface wave(s) generated by contacting the droplet (e.g. of test substance) travels orders of magnitude faster than the droplet diffusion (e.g. diffusion of the test substance throughout the liquid system). Therefore, the change in surface density, and dipole orientation of lipids at the wavefront is purely due to the wave excited by the chemical but not the chemical itself. By measuring the changes in the polarisation of light the position of the surface wave may be determined. The position is related to, for example, the enthalpy released by the chemical as discussed herein.

In examples, the trough may comprise an equilibrium control means configured to control an equilibrium between a lipid thin film carried on a bulk liquid phase and a lipid dispersed in the bulk liquid phase (e.g. wherein the lipid thin film and the lipid dispersed in the bulk liquid phase are the same species). Controlling the equilibrium between the lipid thin film and the lipid dispersed in the bulk liquid phase comprises controlling at least one of: the temperature of the flowing liquid system; the concentration of the lipid dispersed in the flowing liquid system; the pH of the flowing liquid system; the surface area of the lipid thin film.

In examples, the equilibrium control means may comprise any of: the liquid system dispenser configured to dispense at least one component of the liquid system (e.g. an aqueous phase and/or a lipid thin film) into the trough; a secondary liquid system dispenser configured to dispense a substance which is not a component of the liquid system into the trough (e.g. not the aqueous phase and not the lipid thin film); a surface area changing means configured to change the surface area of the lipid thin film disposed on the bulk liquid phase (e.g. aqueous phase); a heater configured to heat the liquid system disposed in the trough.

A flow provider is provided by the liquid system dispenser 110 and the trough outlet 126 (e.g. the liquid system dispenser and the trough outlet are configured to be operable as a flow provider). The flow provider provided by the liquid system dispenser 100 and the trough outlet 126 may be described as a passive flow provider because, after some initial conditions have been satisfied (e.g. the liquid system dispenser is loaded with liquid system), a flowing liquid system will be provided without any further external input (until the liquid system dispenser depletes the liquid system loaded therein).

The liquid system dispenser outlet 116 comprises a bottom edge 116B and a top edge 116T defining a slit therebetween. The top edge 116T of the liquid system dispenser outlet 116 is disposed at a height $H_T$ from a bottom of the trough vessel 122. The bottom edge 116B is disposed at a height $H_B$ from the bottom of the trough vessel 122. The height $H_B$ is less than the height $H_T$; $H_B < H_T$. The slit has a width (e.g. the shortest distance between any point on the bottom edge 116B and the top edge 116T) of $H_T - H_E$.

The trough outlet 126 comprises an opening in a wall of the trough 120. The opening in the wall of the trough is characterised by a trough outlet edge 126E e.g. a portion of the wall of the trough has an edge which is shorter than the other walls of the trough. The trough outlet edge 126E is disposed at a height $H_\varepsilon$ from the bottom of the trough vessel 122. In examples, the remainder of the edge of the trough has a height of at least $H_B$, that is, the height of liquid system dispenser bottom edge 116B. The height $H_E$ is less than the height $H_B$ of the liquid system dispenser bottom edge 116B from the bottom of the trough vessel 122; $H_E < H_B$.

To establish a flowing liquid system, the interior volume of the trough 122 is provided with the liquid system to a depth D i.e. the shortest distance between a surface S of the liquid system and the bottom of the trough is D.

The depth D is variable. The depth D is variable between the height $H_T$ of the top edge 116T of the liquid system dispenser outlet 116 and the height $H_\varepsilon$ of the trough outlet edge 126E.

In the event that the depth D of the liquid system is greater than the height $H_E$ of the trough outlet edge 126E then the liquid system flows over the trough outlet edge 126E into the liquid system receiver 130.

In the event that the depth D of the liquid system is less than the height $H_T$ of the top edge 116T of the liquid system dispenser outlet 116 then the liquid system flows through the slit defined by the top edge 116T and the bottom edge 116B into the interior volume 122 of the trough.

The flow rate $Q_i$ of the liquid system into the trough 120 (i.e. the flow rate of the liquid system out of the liquid system dispenser 110 via the liquid system dispenser outlet 116) depends on the difference between the liquid system depth D and the height of the top edge 116T of the liquid system dispenser outlet 116. The flow rate $Q_i$ of the liquid system out of the liquid system dispenser 110 via the liquid system dispenser outlet 116 depends on the slit width.

The flow rate Qo of the liquid system out of the trough 120 via the trough outlet 126 depends on difference between the liquid system depth D and the height of the trough outlet edge 126E.

Herein the term flow rate refers to a volume of liquid system passing into or out of a particular element per unit time e.g. the flow rate may be measured in units of $m^3 s^{-1}$.

A steady flow state of the flowing liquid system (e.g. constant flow speed with no net loss of liquid system from the trough) is obtained when the flow rate $Q_i$ of the liquid system into the trough 120 is equal to the flow rate Qo of the liquid system out of the trough 120; $Q_i = Qo$.

Advantageously, providing a flowing liquid system with a laminar flow state may require less computational work (e.g. resources; time) to determine one or more parameter of a generated surface wave and/or to determine a property of the substance which generates the surface wave.

The arrangement illustrated in Figures 1A to 1C advantageously provides a passive self-regulating flow provider is provided thereby reducing the complexity of the analytical apparatus. Advantageously, a laminar flow may be provided (e.g. when a steady flow state has been achieved).

The speed of a notional fluid particle in the steady state may be on the order of 0.1 ms$^{-1}$. Advantageously, providing a speed on the order of 0.1 ms$^{-1}$ may provide a laminar flow.

In examples, a turbulent flow may be used. However, when a turbulent flow is used the computational work required to determine one or more parameters of generated surface waves and/or to determine a property of the substance which generates the surface wave is increased in comparison to the computational work required to determine the same when a laminar flow is used.

In examples, another type of flow provider (e.g. a pump or any fluid mover) may be provided configured to provide a flowing liquid system (e.g. a laminar flow). A flow provider (e.g. a pump) which requires an continuous external input (e.g. electrical power) to thereby provide a flowing liquid system may be referred to as an active flow provider.

In examples, in use, a trough may be disposed at an angle (e.g. obliquely) to a horizontal surface (e.g. a tabletop) thereby defining an upper end of the trough and a lower end of the trough. A liquid system dispenser is disposed at the upper end of the trough. The liquid system dispenser is configured to provide liquid (e.g. a liquid system) to the upper end of the trough. A flowing liquid system is provided as a liquid system enters the upper end of the trough, then flows towards the bottom end of the trough.

In examples, the liquid system is static (i.e. it does not flow). In such examples, the apparatus may comprise: the trough for holding the liquid system; the contacting means; and, the detector.

Other contacting means and methods may also be used. For example, to contact the surface a droplet (e.g. of a reference substance and/or a test substance) may be dropped onto the surface by being released from a height above the surface as opposed to being brought into contact by being controlled to move into contact. A droplet released from a height to drop onto the surface of the liquid system can rebound thereby generating a plurality of waves which may require a greater amount of computational work to determine parameter of the generated waves and/or a property of the dropped substance which generates the wave. An advantage with dropping the droplets onto the surface is that because it rebounds the mixing of the droplet (comprising the test substance) with the bulk liquid phase may be avoided and the surface wave excited may be indicative of only the surface properties of the droplet until the droplet breaks and mixes.

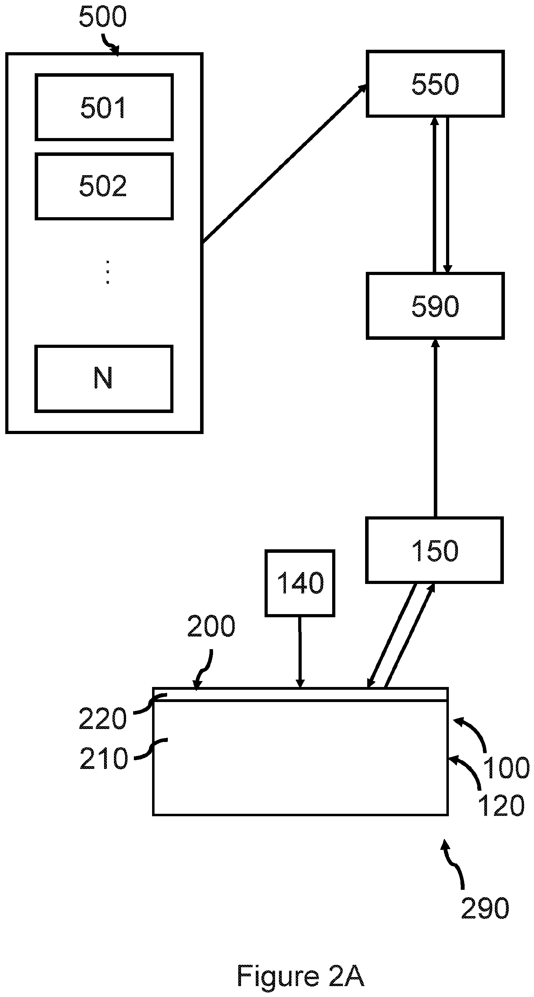

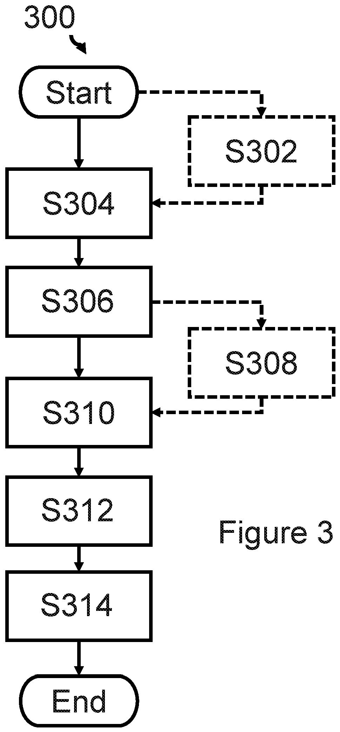

Figure 2A illustrates a schematic view of an analytical system 290 for performing the analytical method 300 illustrated in Figure 3 and described herein.

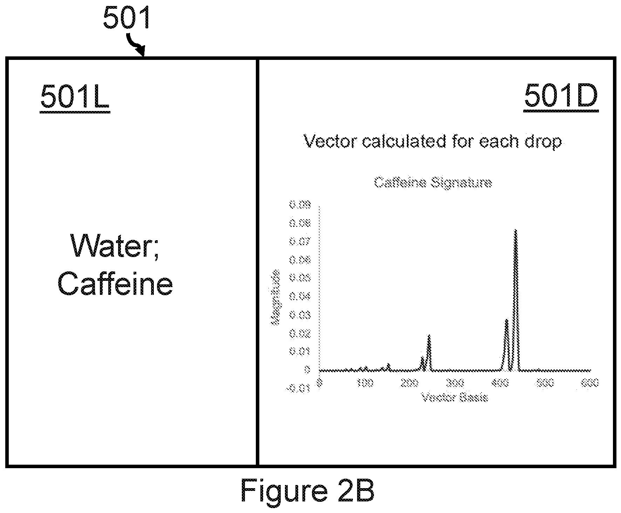

The analytical system 290 comprises the analytical apparatus 100 of Figures 1A to 1B. As can be seen from Figure 2 some other features of the analytical apparatus are omitted from Figure 2 for the sake of simplicity.

A liquid system 200 is provided. The liquid system 200 is disposed in the trough 120. The liquid system 200 comprises: a bulk liquid phase 210; and, a thin film 220. The thin film 220 is carried on a surface (e.g. a top surface) of the bulk liquid phase 210. The liquid system is disposed in a trough (e.g. trough 120 illustrated in Figures 1A to 1C). The bulk liquid phase 210 comprises an aqueous phase. The thin film 220 is a lipid monolayer. The lipid monolayer 220 exhibits an electrical response to mechanical stress; and, exhibits a mechanical response to electrical stress.

The liquid system in Figure 2 is stationary. However, the liquid system may be flowed by a flow provider (e.g. the flow provider comprising the arrangement illustrated in Figures 1A to 1C).

In addition to the liquid system, the analytical system 290 further comprises: a stored difference measure database 500, a storage device 550 and a computer terminal 590. The stored difference measure database 500 is stored on the storage device 550. The storage device 550 is communicatively coupled to the computer terminal 590 i.e. the computer terminal 590 can send information to and receive information from the storage device 550. The detector 150 is communicatively coupled to the computer terminal 590 i.e. the detector can send a measurement to the computer terminal 590.

The contacting means 140 contacts the surface with droplets of a reference substance and test substance in the manner described above with reference to Figures 1A to 1C.

The detector 150 measures the position of the surface of the liquid system 200 at a given point on the surface as a function of time when a surface wave propagates across the surface. The measurement (i.e. the aforementioned position as a function of time) is sent to the computer terminal 590. The computer terminal 590 generates an indication (indicative of the surface wave) based on the measurement. For example as is shown in Figure 4A this may comprise the measurement itself (shown in Figure 4A as a time series).

When the surface of the liquid system 200 is contacted by droplet of a reference substance by the contacting means 140 a surface wave is generated in the surface. This surface wave may be referred to hereinafter as a reference wave. The position of the reference wave is measured by the detector 150 i.e. the detector 150 obtains a reference measurement. The reference measurement is sent from the detector 150 to the computing device 590. Upon receipt of the reference measurement the computing device 150 generates the reference indication (e.g. a trivial example of the computer device generating the reference indication is when the reference indication is identical to the reference measurement i.e. the computing device doesn't change the reference measurement).

In a similar manner, when the surface of the liquid system 200 is contacted by droplet of a test substance by the contacting means 140 a surface wave is generated in the surface. This surface wave may be referred to hereinafter as a test wave. The position of the test wave is measured by the detector 150 i.e. the detector 150 obtains a test measurement. The test measurement is sent from the detector 150 to the computing device 590. Upon receipt of the test measurement the computing device 150 generates the test indication (e.g. a trivial example of the computer device generating the test indication is when the test indication is identical to the test measurement i.e. the computing device doesn't change the test measurement).

Figure 4A illustrates a graph of wave position against time and a first curve 401 and a second curve 402. The first curve 401 showing the position of a liquid system as a function of time (an example of a reference measurement) when a reference substance comprising water is contacted with a liquid system and a second curve 402 showing the position of a liquid system as a function of time (an example of a test measurement) when a test substance comprising caffeine is contacted with a liquid system.

The computing device 590 is configured to generate a difference measure based on the reference indication and the test indication. The reference indication is a vector (e.g. a concatenated vector) comprising a plurality of components i.e. $r = (r_1, r_2, \dots r_n)$. The test indication is a vector (e.g. a concatenated vector) comprising a plurality of components i.e. $t = (t_1, t_2, \dots t_n)$. The difference measure D, may be comprise the square root of the sum of the square of the difference between each pair of corresponding components of the reference indication of test indication i.e. $D = ((r_1-t_1)^2 + (r_2-t_2)^2 + \dots + (r_n-t_n)^2)^{1/2}$.

In the present example described here, the difference measure is a Euclidean distance metric between the reference indication and the test indication (i.e. $D = ((r_1-t_1)^2 + (r_2-t_2)^2 + \dots + (r_n-t_n)^2)^{1/2}$). This difference measure is subsequently used to identify the test substance by comparing the difference measure to entries of the stored difference measure database 500 (described herein).

Figure 4B illustrates a graph of magnitude squared against time squared with a third curve 403. Each point on the third curve 403 represents the square of the difference between the corresponding components of the reference indication (i.e. the time series 401 in Figure 4A) and the test indication (i.e. the time series 402 in Figure 4B) i.e. the nth point on the third curve 403 represents the value of $(r_n-t_n)^2$. The area between third curve 403 and the x-axis is equal to the square of the difference measure. A computer (e.g. computer terminal 450) may calculate this area and find the root of said area which is equal to the difference measure. The difference measure may be compared with entries of a stored difference measure database to determine a property of the test substance.

A different detector may be provided which is configured to measure a different parameter of the generated wave e.g. to measure the frequency and/or speed and/or wavelength of waves generated on the liquid system. Parameters of the surface wave may comprise any of: wavelength; frequency; wave speed; and amplitude. Amplitude of the wave may refer to surface density of particles at the surface of a liquid system (e.g. density of a lipid monolayer at the surface) and the wave may be mediated by disturbances from equilibrium of that surface density.

The storage device 550 is a server which is remote from the computer terminal 590. The storage device 550 and the computer terminal 590 are communicatively coupled (e.g. via the internet). In other examples, the storage device can be local to the computing terminal (e.g. the storage device can be an SSD or HDD of the computing terminal).

The stored difference measure database 500 comprises a plurality of entries 501, 502, ... N, wherein each entry has a label and a stored difference measure. The label of a given entry identifies the two substances used to obtain a given stored difference measure.

Reference indications and test indications may be vectors which represent the response (to respective contacting with a reference substance and a test substance) of the liquid system as a time series recorded from a single point (i.e. a temporal feature) on the surface, or a concatenation of timeseries recorded from multiple points (i.e. a spatiotemporal feature) on the surface, e.g. using an array detector.

Figure 2B illustrates a schematic view of the first entry 501 of the stored difference measure database 500.

The first entry 501 represents a first baseline substance pair. The first baseline substance pair comprises a first baseline substance which is water and a second baseline substance which is caffeine. The first entry 501 comprises a label 501L and a difference measure 501D. The label 501L identifies the baseline substance pair represented by the first entry. The difference measure 501D defines a Euclidean distance between the two vectors which represent the reference indication and the test indication (see for example, the square root of the area between the third curve 403 and the x-axis in Figure 4B).

The database is a stored association between a label and a difference measure so that any given difference measure is identifiable by the associated label and vice versa.

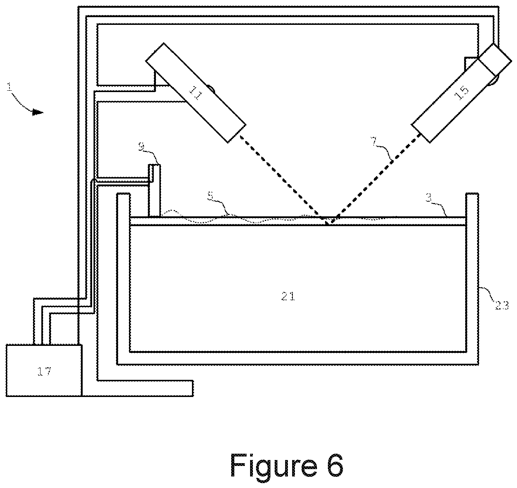

The other entries 502, ... N, of the stored difference measure database 500 are similar to the first entry 501 in that the other entries have a label and stored difference measure. The other entries 502, ... N, of the stored difference measure database differ from those of the first entry 501 in that the other entries represent different baseline substance pairs. For example, the second entry 502 represents water and ethanol and the third entry represents water and methanol etcetera. A method of adding entries to the stored difference measure database 500 is described below with reference to Figure 6.

The computing device 590 sends the difference measure obtained via the measurement of the waves generated by the reference substance and the test substance (referred to herein after as the experimental difference measure) to the storage device 550. The storage device 550 compares the experimental difference measure to the known different measures which occupy entries of the stored difference measure database 500 to thereby determine a similarity (within a selected similarity threshold) between the experimental difference measure and one or more of the known different measures of the database 500.

If the experimental difference measure is dissimilar to a given stored difference measure in a given entry of the database (i.e. the similarity between the two does not fall within the selected similarity threshold), then the experimental difference measure is deemed not to match the stored difference measure. In the case that no match is found between the experimental reference difference and all of the entries of the stored difference measure database, the storage device 550 sends a message to the computing device stating that no match was found.

If the experimental difference measure is dissimilar to a given stored difference measure in a given entry of the database (i.e. the similarity between the two falls within the selected similarity threshold), then the experimental difference measure is deemed to match the stored difference measure. In this case, the storage device 550 reads the label of that given entry and sends this label to the computing device 590.

The computing device 590 comprises a screen (not shown) which is configured to display: a label received from the computing device in the event that a match is found; and, a message stating that no match was found.

It will be appreciated that in some examples the experimental difference measure may be a superposition of a plurality of the stored difference measures (e.g. a difference measure representing water & caffeine and a difference measure representing water & ethanol) and, therefore, the test substance may be deemed to comprise a plurality of substances (e.g. the test substance comprises both caffeine and ethanol).

Figure 3 illustrates a flowchart depicting an analytical method 300 of determining a property of a test substance. The method 300 comprises a sequence of steps set out below.

The liquid system 200 may be controlled S302 to provide a particular equilibrium between the lipid thin film 220 and the lipid dispersed in the bulk liquid phase 210. One example of a way to control the liquid system to provide this equilibrium is to control at least one of: the temperature of the liquid system; the concentration of the lipid dispersed in the liquid system; the pH of the liquid system; and, the surface area of the lipid thin film.

For any given state of the liquid system corresponding parameters of the thin film exist. These thin film parameters can be maintained (e.g. held at a constant value) by controlling the equilibrium as above. The thin film parameter(s) in question comprise any one or more of: the surface pressure of the lipid thin film ($\pi$) (e.g. pressure lateral to the surface of the thin film); the surface tension of the lipid thin film ($\gamma$); the surface concentration of the lipid thin film ($\Gamma$); the surface potential of the lipid thin film ($\Delta V$); the surface elastic modulus of the lipid thin film (E); capacitance of the thin film; heat capacity of the thin film.

In the manner set out above, thin film parameters are controlled to permit a reference indication indicative of a wave generated by a reference substance to be directly compared with a test indication of a surface wave generated by a test substance.

The next step of the method is to contact, S304, the surface of the liquid system with the reference substance thereby to generate a surface wave on the liquid system (i.e. a reference wave).

The surface of the liquid system may be contacted with the reference substance (for example a droplet of the reference substance) using the contacting means 140. In examples, other contacting means and/or contacting methods described herein may be used. In examples, a droplet comprising the reference substance may be generated by any of the following methods: nebulization (e.g. using a nebulizer); cross-flowing droplet formation; flowfocusing droplet formation; co-flowing droplet formation.

When the surface of the liquid system is contacted by the reference substance (e.g. by a droplet of the reference substance), a surface wave is generated in the surface on the liquid system. As noted above, the lipid monolayer exhibits an electrical response to mechanical stress; and, exhibits a mechanical response to electrical stress. Therefore, the surface wave generated by contacting the surface with the reference substance may comprise a combination of one or more waves generated from any of: a purely mechanical interaction between the reference substance and the surface; a purely electrical interaction between the reference substance and the surface; a piezoelectric interaction between the reference substance and the surface.

The reference substance has a known property. In the present example, the property of the test substance to be determined is the identity of the test substance and the identity of the reference substance is known i.e. the identity of the reference substance is stored on the computing device 590.

The next step of the method is to obtain, S306, a reference indication using the optical detector 150 described with reference to Figure 1A. The reference indication is indicative of the reference surface wave generated at the surface of the liquid system 200. The reference indication is indicative of one or more parameters of the reference surface wave.

The detector 150 measures the position of the surface at a given point as a function of time i.e. the detector 150 obtains a reference measurement. The reference measurement (i.e. the aforementioned position as a function of time) is sent to the computer terminal 590. The computer terminal 590 generates a reference indication based on the reference measurement.

In examples, the reference measurement and the reference indication are identical i.e. the computer terminal doesn't need to generate a reference indication based on the reference measurement. In examples, the test measurement and the test indication are identical i.e. the computer terminal doesn't need to generate a test indication based on the test measurement.

The next step of the method is to control S308 the equilibrium between the lipid thin film 220 and the lipid dispersed in the bulk liquid phase 210 so as to return the liquid system 200 to the particular equilibrium which applied when the reference substance was contacted to the surface (see steps S302 and S304 above).

The step S308 comprises returning the thin film parameters to the values which existed prior to the thin film 220 at the surface of the bulk liquid phase 210 being contacted with the reference substance. Therefore, the thin film parameters are controlled to permit a reference indication of a surface wave generated by a reference substance to be directly compared with a test indication of a surface wave generated by a test substance.

The next step of the method is to contact, S310, the surface of the liquid system 200 with a test substance thereby to generate another surface wave on the liquid system (i.e. a test wave).

The surface of the liquid system 200 is contacted with the test substance using one of the contacting means 140. The contact between the test substance and the liquid system may be performed identically to the contact between the reference substance and the liquid system as described above in step S304.

The next step of the method is to obtain, S312, a test indication.

The test indication is indicative of the test surface wave generated at the surface of the liquid system 200. The test indication is indicative of the test surface wave generated at the surface of the liquid system. The test indication is indicative of one or more parameters of the test surface wave.

The detector 150 measures the position of the surface at a given point as a function of time i.e. the detector 150 obtains a test measurement. The test measurement (i.e. the aforementioned position as a function of time) is sent to the computer terminal 590. The computer terminal 590 generates a test indication based on the test measurement.

The next step of the method is to determine, S314, a property of the test based on the reference indication and the test indication. In the present example, the property of the test substance is its identity.

The computing device 590 generates a difference measure based on the reference indication and the test indication. In the example described here, the difference measure is a Euclidean distance between the reference indication and the test indication. This difference measure is subsequently used to identify the test substance by comparing the difference measure to entries of the stored difference measure database 500.

The computing device 590 then sends the difference measure (referred to herein after as the experimental difference measure) to the storage device 550. The storage device 550 compares the experimental difference measure to the known different measures which occupy entries of the stored difference measure database 500 to determine a similarity (within a selected similarity threshold) between the experimental difference measure and one or more of the known different measures of the database 500.

As set out above with reference to Figure 2A, the storage device 550 determines whether or not there is a match between the experimental difference measure and any of the stored difference measures. The storage device 550 sends a message to the computing device 590 stating whether or not there is a match. A user is informed of the outcome (match or no match) by the message displayed on the screen of the computing device 590.

The above method is described as a series of discrete steps. However, the steps may be performed continuously, for example, the equilibrium may be controlled on a continuous basis (e.g. using a closed feedback loop to perform steps S302 and S308 and in such examples these steps may be ignored as they are rendered otiose as discrete steps).

In examples, the steps of controlling the liquid system (steps S302 and S308) and the steps of contacting the surface of the liquid system with a reference substance and a test substance (steps S304 and S310 respectively) may be performed separately (e.g. remotely) from the steps of obtaining a reference indication and a test indication (steps S306 and S312 respectively) and the step of determining a property of the test substance based on the reference indication and the test indication (step S314). That is the two sets of steps may be performed by different parties, a first party and a second party. An aspect of the disclosure provides a computer system comprising a computing device and a storage device wherein the storage device comprises a stored difference measure database, and wherein the computing device is configured to perform at least one of the following: (I) to receive reference indications and test indications (e.g. electronically from a third party performing steps S302 S304 S308 S310); (II) to receive reference measurements and test measurements (e.g. electronically from a third party performing steps S302 S304 S308 S310) and to generate reference indications and test indication based on the received reference measurements and test measurements respectively.

In alternative examples, the liquid system may consist of a bulk liquid phase (e.g. the liquid system may not comprise a thin film such as a lipid monolayer). In such examples the bulk liquid phase may consist essentially of water. In such examples, the above method (e.g. the steps S302 to S312) may be performed with the liquid system.

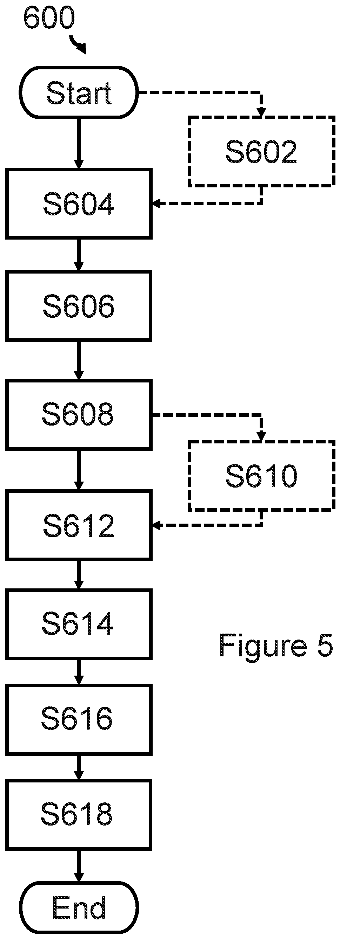

Figure 5 illustrates flowchart depicting a method 600 of adding an entry to the stored difference measure database 500 using the analytical system 290. The analytical system 290 is used to add entries to the stored difference measure database 500.

The liquid system 200 may be controlled S602 to provide a particular equilibrium between the lipid thin film 220 and the lipid dispersed in the bulk liquid phase 210. liquid system 200 is controlled in the same manner in the same manner as set out above in detail with reference to step S302.

The next step of the method is to contact, S604, the surface of the liquid system 200 with a first baseline substance thereby to generate a surface wave on the liquid system 200 (i.e. a first baseline wave). The first baseline substance is contacted with the surface in the same manner in which the reference substance is contacted with the surface as set out above in detail with reference to step S304.

The next step of the method is to obtain, S606, a first baseline indication using the optical detector 150 described with reference to Figure 1A. The first baseline indication is indicative of the first baseline surface wave generated at the surface of the liquid system 200. The first baseline indication is indicative of one or more parameters of the reference surface wave. The first baseline indication is with the surface in the same manner in which the reference indication is obtained as set out above in detail with reference to step S306. In short, the computer terminal 550 generates the first baseline indication based on a received first baseline measurement obtained from the optical sensor 150.

The next step of the method is to assign, S608, a property of the first baseline substance to the first baseline substance indication. A user inputs the identity of the first baseline reference substance into the computer terminal 550 using an input device of the computer terminal (e.g. a mouse and/or keyboard). The computer terminal 550 associates the identity input by the user with the first baseline indication.

The next step of the method is to control, S610, the equilibrium between the lipid thin film 220 and the lipid dispersed in the bulk liquid phase 210 so as to return the liquid system 200 to the particular equilibrium which applied when the first baseline substance was contacted to the surface (see steps S602 and S604 above).

The next step of the method is to contact, S612, the surface of the liquid system 200 with a second baseline substance thereby to generate a surface wave on the liquid system 200 (i.e. a second baseline wave). The second baseline substance is contacted with the surface in the same manner in which the reference substance is contacted with the surface as set out above in detail with reference to step S306.

The next step of the method is to obtain, S614, a second baseline indication using the optical detector 150 described with reference to Figure 1A. The second baseline indication is indicative of the second baseline surface wave generated at the surface of the liquid system 200. The second baseline indication is indicative of one or more parameters of the reference surface wave. The second baseline indication is with the surface in the same manner in which the reference indication is obtained as set out above in detail with reference to step S304. In short, the computer terminal 550 generates the second baseline indication based on a received second baseline measurement obtained from the optical sensor 150.

The next step of the method is to assign, S616, a property of the second baseline substance to the second baseline substance indication. A user inputs the identity (a property) of the second baseline reference substance into the computer terminal 550 using an input device of the computer terminal (e.g. a mouse and/or keyboard). The computer terminal 550 associates the identity input by the user with the second baseline indication.

The next step of the method is to generate, S618, an entry of the stored difference measure database.

The computer terminal 550 generates a difference measure based on the first baseline substance and the second baseline substance. In the example described here, the difference measure is a Euclidean distance between the first baseline indication and the second baseline indication. The computer terminal 550 generates a label for the generated difference based on the identity of the first baseline substance and the second baseline substance. The computer terminal 550 associates the label and the generated difference based on the identity of the first baseline substance and the second baseline substance to thereby generate an entry for the stored difference measure database. The computer terminal 550 send the generated entry to the storage location 590. The storage location adds the received entry to the stored difference measure database 500.

In examples, the steps of controlling the liquid system (steps S602 and S610) and the steps of contacting the surface of the liquid system with a first baseline substance and a second baseline substance (steps S604 and S612 respectively) may be performed separately (e.g. remotely) from the other steps of the method. That is the two sets of steps may be performed by different parties, a first party and a second party. An aspect of the disclosure provides a computer system comprising a computing device and a storage device wherein the storage device comprises a stored difference measure database, and wherein the computing device is configured to receive baseline indications (e.g. electronically from a third party performing steps S602 S604 S610 S612).

In examples, other properties may be assigned to each of the baseline indications either instead of the identity of each of the baseline indications or in addition thereto. For example, the other properties may include any of: the partition coefficient, wherein the partition coefficient is the ratio of the concentration of the baseline substance in the lipid phase and aqueous phase; the viscosity of the baseline substance; the charge of baseline substance; the solubility of the baseline substance in the liquid system; the chemical potential per mol of the baseline substance; the enthalpy of interactions between the baseline substance and the liquid system; the identity of the baseline substance; the enthalpy of transition for conformational degrees of freedom of the baseline substance; the hydrophobicity of the baseline substance.

In an example, the property of assigned to each of the baseline indications is the viscosity each of the baseline substances. In such examples, the method 300 set out above may be performed in the same manner. When performing step S314 (i.e. determining a property of the test substance identity of the test substance based on the reference indication and the test indication), the storage device 550 determines if there is a match between the experimental difference measure and any of the stored difference measures. If a match is determined, the label of the matched stored difference measure is sent to the computing device. The label will be the difference between the viscosity of water and the viscosity of caffeine. The computing device 590 is programmed to take water as the reference fluid and stores a value of the viscosity of water. The computing device 590 displays a value of the viscosity of the caffeine based on the stored value of the viscosity of water and the label received from the storage location 550.

The stored difference measure database 500 is specific to a given liquid system (e.g. water carrying a specific lipid monolayer at the surface). Other stored difference measure databases specific to other liquid systems may also be provided using the method above.

In examples, the experimental difference measure may be a superposition of a plurality of the stored difference measures e.g. the experimental difference measure E is a vector sum of two stored difference measures $K_1$ and $K_2$.

$$E = \alpha K_1 + \beta K_2$$

Wherein $\alpha$ and $\beta$ are scalars.

$$K_1 = R_0 - R_1$$

$$K_2 = R_0 - R_2$$

Wherein: $R_0$ is a reference indication for a zeroth reference substance (e.g. water); **$R_1$** is a reference indication for a first reference substance (e.g. caffeine); and **$R_2$** is a reference indication for a second reference substance.

The ratio of the scalars $\alpha/\beta$ may be proportional to the relative concentrations of the first reference substance and the second reference substance.

Figure 6 illustrates an apparatus according to the present disclosure. The apparatus 1 shown in Figure 6 comprises, a conduit 9 for providing eluate from an output of a chromatography column to the surface of the liquid system, light beam optics 11, a detector 15, and a wave measurement module 17. As illustrated in Figure 6, the apparatus 1 also comprises a reservoir 23 holding a volume of liquid 21 and having the liquid thin film 3 at the surface of the volume of liquid 21 to provide a liquid system such as any of those described herein. The reservoir 23 may be provided by a trough, such as a Langmuir trough. As noted above, the liquid system 3, 23 in such a trough may be static and need not flow.

Also shown in Figure 6 are mechanical fixtures 19 for holding the apparatus in position with respect to the reservoir 23, but it will be appreciated that these fixtures 19 are not essential and may be made and sold separately from the apparatus 1 itself. The wave measurement module 17 is connected to the detector 15 for the communication of control signals and data, it may also be connected to the light beam optics 11.

Typically, the thin film 3 comprises a type of liquid which is different from that of the volume of liquid 21. The liquid thin film 3 and the volume of liquid 21 may therefore have an interface between them such as a liquid-liquid interface. The thin film 3 may have viscoelastic properties. These and other types of thin films may exhibit a variety of surface wave modes in response to stimulus. Examples of such wave modes comprise Rayleigh waves, gravity waves, capillary waves and Lucassen waves. Examples of types of liquid which provide the thin film 3 include proteins and lipids and other types of liquid. It will be appreciated in the context of the present disclosure that such materials may also be held (e.g., dispersed in suspension or otherwise) in the volume of liquid and dynamic equilibrium may exist between the thin film and the material held in the volume of liquid 21. Examples of types of liquid which may provide the volume of liquid 21 comprise aqueous solutions.

A conduit 9 provides eluate from the output of a chromatography column. The conduit 9 is arranged so that liquid exiting the conduit 9 contacts the liquid thin film 3 at the surface of the liquid system 21 e.g. droplets of liquid exiting the conduit may be brought into contact with the surface, for example, by movement of the droplets such as dropping. The fixtures 19 hold an outlet of the conduit 9 above and/or adjacent to the surface of the liquid system.

The liquid contacting the liquid thin film 3 generates a surface wave in the thin film 3. At least one mode of the surface wave is a Lucassen wave.

The detector 15 is a transducer configured to sense the surface wave. In Figure 6 the transducer is a non-contact transducer such as an optical sensor which may for example comprise a light source and a light detector as described herein.

The detector 15 is configured to provide an indication of an analyte present in the eluate based on the surface wave. The detector 15 is configured to determine a parameter of the surface wave e.g. the displacement of the wave. The detector is configured to provide an indication of an analyte present in the eluate based on the parameter of the surface wave.

The conduit may be connected to a chromatography column such as an HPLC column. Other conduits configured to dispense eluate to the surface of the liquid system may also be provided.

The detector may be a contact transducer for example an electrical or mechanical transducer (e.g. a Wilhelmy balance).

A method of generating a plasmagram from a liquid eluate provided from a chromatography column comprises: contacting the surface of a liquid system with the eluate to generate a surface wave on the surface of the liquid system; determining based on the surface wave, an indication of an analyte present in the eluate. The method may be performed using apparatus such as that described with reference to Figure 6.

Further embodiments are envisaged. It is to be understood that any feature described in relation to any one embodiment may be used alone, or in combination with other features described, and may also be used in combination with one or more features of any other of the embodiments, or any combination of any other of the embodiments. Furthermore, equivalents and modifications not described above may also be employed without departing from the scope of the invention, which is defined in the accompanying claims.

Methods herein are described as a series of discrete steps. However, the steps need not be discrete.

It will be appreciated by the skilled addressee having read the present disclosure that the surface of a material has a thermodynamic potential that is independent of its volume. The physical and chemical properties of a surface are derived from its thermodynamic potential. For example, the response of the surface to a mechanical perturbation is given by properties such as surface tension and lateral compressibility. Similarly, the response of the surface to an electromagnetic perturbation is given by properties such as surface dipole moment. As a result of these perturbation, different types surface waves may be generated on a surface e.g. a surface of a fluid (e.g. a liquid) forming an interface with another fluid (e.g. air). Some example types of surface waves are: Rayleigh waves; Gravity waves; Capillary waves; Lucassen waves. The physics of these waves have been described in Nonlinear fractional waves at elastic interfaces Julian Kappler, Shamit Shrivastava, Matthias F. Schneider, and Roland R. Netz Phys. Rev. Fluids 2, 114804 - Published 20 November 2017. These waves may be hydrodynamically coupled.

Rayleigh waves are characterised by elliptical motion of a notional fluid particle in a plane which is perpendicular to the surface at equilibrium and parallel to the direction of propagation of the wave.

Gravity waves are characterised by a displacement from equilibrium of a notional fluid particle at the surface wherein the displacement of the notional particle is characterised by having a restoring force of gravity or buoyancy.

Capillary waves are characterised by a displacement from equilibrium of a notional fluid particle wherein the displacement of the notional fluid particle is in a direction transverse to the surface at equilibrium and transverse to the direction of propagation of the wave and have a restoring force of surface tension.

Lucassen waves are characterised by a displacement from equilibrium of a notional fluid particle at a surface of a wave-medium by oscillation in a direction parallel to that surface at equilibrium and parallel to the direction of propagation of the wave. In Lucassen waves this notional particle is subject to a restoring force resulting from the surface elastic modulus of the surface of the wave-medium. Put another way Lucassen waves are compression-rarefaction waves which occur in the plane of a boundary (an interface) between a wave-medium and an adjacent medium such as air.

Lucassen waves have been observed in lipid monolayers and in other types of liquid systems.

*Shamit Shrivastava, Matthias F. Schneider Opto-Mechanical Coupling in Interfaces under Static and Propagative Conditions and Its Biological Implications* describes how a wave can be generated in a lipid monolayer mechanically with a dipper and how parameters of the generated wave, such as the intensity of fluorescent particles therein and the lateral pressure of the surface wave, can be measured, for example using a photo detector and a Wilhemly balance respectively.

Shrivastava S, Schneider MF. 2014 Evidence for two-dimensional solitary sound waves in a lipid controlled interface and its implications for biological signalling. J. R. Soc. Interface 11: 20140098 describes a method in which Lucassen waves can be generated in a lipid monolayer and how parameters of said waves may be measured (e.g. fluorescence energy transfer (FRET) measurements; a piezo cantilever). The document also describes how the state of a lipid monolayer may be characterised by a variety of thin film parameters (e.g. surface density of lipid molecules, temperature, pH, lipid-type, ion or protein adsorption, solvent incorporation, etc.) and also how the state of the lipid monolayer can affect parameters of waves which propagate in the lipid monolayer.

Bernhard Fichtl, Shamit Shrivastava & Matthias F. Schneider, Protons at the speed of sound: Predicting specific biological signaling from physics Nature Scientific Reports describes how Lucassen waves can be generated in a lipid interface in response to a change in pH of the system and that the speed of these waves can be controlled by the compressibility of the interface. The document describes how parameters of these waves depend on the degree of change in pH. The document also describes how mechanical and electrical changes at the lipid interface can be measured (e.g. using a Kelvin probe).

Lucassen waves may be described as interfacial compression waves and may be considered two-dimensional sound waves (sound waves confined to a surface which forms a boundary between two phases e.g. a fluid-air boundary). In a manner analogous to sound waves, shock waves may exist in Lucassen wave systems (e.g. two-dimensional shock waves). Lucassen shock waves may be characterised in the same way as Lucassen waves with the additional constraint that the waves are characterised by changes in the wave medium which are nonlinear and/or discontinuous.

S. *Shrivastava, Shock and detonation waves at an interface and the collision of action potentials, Progress in Biophysics and Molecular Biology,* describes how Lucassen shock waves may propagate through a lipid interface.

Certain features of the methods described herein may be implemented in hardware, and one or more functions of the apparatus may be implemented in method steps. It will also be appreciated in the context of the present disclosure that the methods described herein need not be performed in the order in which they are described, nor necessarily in the order in which they are depicted in the drawings. Accordingly, aspects of the disclosure which are described with reference to products or apparatus are also intended to be implemented as methods and vice versa. The methods described herein may be implemented in computer programs, or in hardware or in any combination thereof. Computer programs include software, middleware, firmware, and any combination thereof. Such programs may be provided as signals or network messages and may be recorded on computer readable media such as tangible computer readable media which may store the computer programs in non-transitory form. Hardware includes computers, handheld devices, programmable processors, general purpose processors, application specific integrated circuits (ASICs), field programmable gate arrays (FPGAs), and arrays of logic gates.

Any processors used in the computer system (and any of the activities and apparatus outlined herein) may be implemented with fixed logic such as assemblies of logic gates or programmable logic such as software and/or computer program instructions executed by a processor. The computer system may comprise a central processing unit (CPU) and associated memory, connected to a graphics processing unit (GPU) and its associated memory. Other kinds of programmable logic include programmable processors, programmable digital logic (e.g., a field programmable gate array (FPGA), a tensor processing unit (TPU), an erasable programmable read only memory (EPROM), an electrically erasable programmable read only memory (EEPROM), an application specific integrated circuit (ASIC), or any other kind of digital logic, software, code, electronic instructions, flash memory, optical disks, CD-ROMs, DVD ROMs, magnetic or optical cards, other types of machine-readable mediums suitable for storing electronic instructions, or any suitable combination thereof. Such data storage media may also provide the data store of the computer system (and any of the apparatus outlined herein).

Other examples and variations of the disclosure will be apparent to the skilled addressee in the context of the present disclosure.

The liquid system provides a transducer in the sense that a disturbance of one type may evoke a response of another (different) type. For example, the application of a mechanical disturbance to the surface may give rise to a corresponding electrical disturbance in response to the mechanical. The types of disturbance may relate to different types of energy for example: mechanical; electrical; magnetic; chemical.

The above types of energy may be coupled thermodynamically in any of the following ways: mechanical-electrical coupling (piezoelectric coupling or flexoelectric); mechanical-chemical coupling; mechanical-thermal coupling; mechanical-optical coupling.

The liquid system may have a surface which exhibits a first response and a second response to a stimulus wherein the first response is coupled to the second response e.g. by a thermodynamic and/or hydrodynamic coupling.

The surface may comprise a film with piezoelectric properties, the first response may be an electrical response and the first stimulus may be a mechanical stress and the second response may be a mechanical response and the second stimulus may be an electrical stress (explained in more detail below). The film may be thin, for example, a self-assembled single molecule thin film of phospholipid molecules at the air-water interface.

The liquid system may comprise a thin film carried on the bulk liquid phase wherein the thin film exhibits an electrical or chemical response to mechanical stress and vice versa, for example, piezoelectric properties such as those exhibited by liquid crystal. In other words, the thin film may: exhibit an electrical response to mechanical stress; and, exhibit a mechanical response to electrical stress. For example, the bulk liquid phase may comprise an aqueous phase and the thin film may comprise a lipid monolayer. Herein the term electrical stress refers to the stress on an object exerted by an electrical field.

The monolayer self assembles at the interface to maximize the system entropy as required by the second law of thermodynamics and is in the state of a complete or partial equilibrium. Therefore, there is an inherent thermodynamic coupling between the thermodynamic properties of the system as required by the Maxwell relations or the mixed derivatives at an entropy maximum. As a result, for example, there is a mechanical coupling in the thin film related to an electrical interaction of the molecules of the material which make up the film. Therefore, there is an inherent electromechanical coupling (resulting from the thermodynamics of the film) which exists in the film.

Perturbations to any one of the thermodynamic properties have a effect by virtue of the thermodynamic coupling as described here for a lipid thin film suspended in water: Shamit Shrivastava, Robin Cleveland, Matthias Schneider On measuring the acoustic state changes in lipid membranes using fluorescent probes Soft Matter, 2018,14, 9702-9712. Therefore, in the event that a test substance is applied to the thin film mechanical, electrical or chemical part of the perturbation may be emphasised at different time scales, the corresponding waves may travel at different speeds and arrive at different times at the secondary detector, and hence may be separated to infer a property of the test substance. In general terms in the event that a test substance is applied to the thin film there will be at least two components to the disturbance of the film, for example: one due to the mechanical effect, namely the physical disturbance resulting from the application of mechanical force; and, a second due to the perturbation of the electromechanical coupling wherein the nature of the second disturbance can be used to infer a property of the test substance.

In more detail, in the event that a test substance is applied to the thin film then the thin film will be perturbed chemically (e.g. chemical potential of the test substance with respect to insertion in the thin film, binding, or a local change in pH), thermally (release or absorption of heat due to exothermic or endothermic nature of interaction), electrically (hydrophobic or electrostatic interaction) and mechanically (surface tension gradients, steric effects). These different interactions will perturb the film at different time scales setting up propagating surface waves in the thin film. The waves therefore allow mapping of timescales of interactions into wavelengths of the propagating wave as given by the dispersion relation for the surface waves. In other words, it allows mapping temporal features of a complex interaction into spatial features. Furthermore, the dispersion allows separation of these features in space making them easier to analyse. By measuring the properties of these waves physical and chemical properties of the test substance can be inferred.

Perturbations of the monolayer in response to an interaction with a test substance and the monolayer are indicative of the test substance, the lipid monolayer and the bulk liquid phase upon which the lipid monolayer sits. Put in other words, the surface wave resulting from said perturbations is indicative of the test substance, the lipid monolayer and the bulk liquid phase. The surface wave is characterised by parameters (e.g. position, frequency, wavelength, wave speed).

Parameters of the surface wave may comprise any of: wavelength; frequency; wave speed; and position. Position herein may refer to: a change in surface density of particles at the surface of a liquid system (e.g. change in density of a lipid monolayer at the surface).

In otherwords, the surface wave is a physical mechanical wave. Parameters of a physical mechanical wave may be measured using, for example, any of: an optical detector (e.g. such as that described herein and/or that described in *Shamit Shrivastava, Matthias F. Schneider Opto-Mechanical Coupling in Interfaces under Static and Propagative Conditions and Its Biological Implications and other papers cited herein*) ; an output transducer (e.g. such as that described in WO2019234437A1)

The surface wave measured may also refer to a variation in any of: surface charge, dipole moment of the surface molecules, surface potential, surface ionization or protonation, surface pressure, surface temperature. The variation of these system parameters may be referred to as a surface wave wherein the surface wave has parameters such as length; a frequency; a wave speed; and an amplitude. In this case amplitude refersto the magnitude of the surface charge, the magnitude of the dipole moment of the surface charge etc.

Parameters of these waves may be measured using, for example, any of: a temperature probe; an optical detector. For example, the optical detector may direct polarized light on the surface and detect polarized light reflected from the surface. Differences in polarization of the polarized light directed to the surface and of the polarized light which is reflected from the surface may be indicative of electrical phenomena on the surface (e.g. surface charge, dipole moment of the surface molecules, surface potential, surface ionization or protonation) and may be mapped to a change in a thermodynamic state of the surface.

Parameters of the surface wave may be coupled to one another. The coupling between parameters may be thermodynamic and as a result, one or multiple of these positions can be measured simultaneously e.g. because the parameters are coupled. As set out above, the thermodynamic coupling may be an electro-mechanical coupling.

Examples described herein refer to a liquid system which comprises a bulk liquid phase carrying a lipid monolayer at the surface. Providing a lipid monolayer may be preferable as it functionalises the surface. That is, it provides an ordered surface the thermodynamic state of which is highly constrainable making it easy to perform a wide range of measurements (not just mechanical surface wave measurements but measurements of electrical phenomena at the surface e.g. dipole moment). However, the method and apparatus described herein are not constrained to a liquid system which comprises a bulk liquid phase carrying a lipid monolayer at the surface. For example, the methods and apparatus described herein may be equally applicable to a liquid system consisting essentially of water.

A property of a test substance may be determined based on parameters of a surface wave generated by the test substance because the nature of the interaction between the test substance and the surface of the liquid system. The interaction is a complex phenomenon because of the involvement of so many physical and chemical variables but is highly reproducible. An account of the interaction is set out below.

When the test substance is brought close to or in contact with a surface of a liquid system there is a local change of enthalpy at the surface (e.g. sometimes referred to as an local injection of enthalpy). The local change in enthalpy in the surface is coupled to the position of the surface pressure wave by the following equation:

$$\Delta h - \Delta \pi (a_0 + a) = 0$$

Wherein:

- $\Delta h$ is the change in enthalpy of the surface;
- $\Delta \pi$ is the change of surface pressure of the surface;
- $a_0$ is equivalent specific area for the lipid monolayer before the wave arrives
- $a$ is equivalent specific area of the lipid monolayer across the wavefront

The above equation is obtained using one dimensional detonation theory as described here: Shamit Shrivastava Shock and detonation waves at an interface and the collision of action potentials Prog Biophys Mol Biol 2021 Jul;162:111-121. doi: 10.1016/j.pbiomolbio.2020.12.002. Epub 2021 Jan 28.

The amount of enthalpy released when a chemical is added to the surface of the liquid system (referred to sometimes as the interface) is approximately given by its chemical potential with respect to the interface:

$$\mu_i \approx \left( \frac{\delta h}{\delta N_i} \right)_{S, \pi, N_{j \neq i}}$$

Wherein:

- $\mu_i$ is the chemical potential of the $N_i$ molecules of a species *i* interacting with the surface;
- $N_i$ is the number of molecules of a species *i* which interact with the surface;
- $h$ is the enthalpy of the surface;
- $\pi$ is the surface pressure;
- S is the entropy of the surface.

There are many variables involved in the interaction thereby making it very complex to forward model. For example, the enthalpy is not released at an instant but is released over by a variable amount over a large time period and also, the chemical potential is a result of numerous kinds of forces and interactions each having different timescales. Furthermore, for example, different lipid films have different susceptibilities for absorbing energy from the test substance at different timescales (e.g. a peak in absorption spectrum may exist that depends on the lipid and its thermodynamic state as shown here; D. B. Tata and F. Dunn Interaction of ultrasound and model membrane systems: analyses and predictions J. Phys. Chem. 1992, 96, 8, 3548-3555 April 1, 1992). The above description also discounts dissipation that is unavoidable and is also distributed in time as given by the various viscosities of different components in the interaction. Finally the energy transferred from the test substance to the surface of the liquid system may partitioned between different surface wave modes (e.g. a first fraction of the energy generates Lucassen wave and a second fraction of the energy generates Rayleigh waves etc.).

It is possible to use a liquid system consists essentially of water because the fundamentally mechanism relies determining a thermodynamic state of the surface of the liquid system (and determining changes thereto), for example, based on the electric potential at the surface.

In examples, wherein the liquid system consists essentially of water, the surface of the liquid system comprises an air-water interface. The air-water interface has a surface potential which can be measured (see e.g. K. Leung, J. Phys. Chem. Lett. 2010, 1, 2, 496-499 Publication date 28 December 2009) and used to excite capillary waves electrically (see e.g. L. Cantu et al. An interferometric technique to study capillary waves, Advances in Colloid and Interface Science, Volume 247, 2017, Pages 23-32).

Put simply, energy is released from the interaction between the test substance and the surface of the liquid system and this energy has to dissipate). A first fraction of the energy released may diffuse without generating a measurable wave but a second fraction of the energy released may generate a surface wave which is measurable. Of the second fraction of the energy which generates a surface wave (referred to as the propagating component), this energy is further divided into further fractions such as: a third fraction which will dissipate into the bulk liquid phase as usual sound waves; a fourth fraction which will generate a first surface wave e.g. Lucassen waves; and, a fifth fraction which will generate a second surface wave (e.g. a Rayleigh waves) etc.. The partition of the energy into the above components will be determined by various rules dependent on the compressibility and viscosities of the two media (e.g. the air and water).

In examples wherein the liquid system consists of a bulk liquid phase and does not comprise a thin film (e.g. a liquid system consisting essentially of water) the interface (surface of the liquid system forming the air-liquid interface) is quite incompressible and, therefore, less energy may partition into bulk liquid phase as typical sound waves in comparison to the amount of energy which generates surface waves (e.g. capillary modes).

The liquid system need not comprise any thin film. For example, the methods described herein may be performed with a thin film such as a lipid monolayer or without a thin film at all (e.g. with just a bulk liquid phase). The methods described herein may be performed using an analytical apparatus such as that illustrated in Figures 1A to 1C or by utilising or retrofitting existing apparatus such as a Langmuir trough.

The term laminar flow herein refers to a flow of a liquid system wherein the Reynold number, Re, of the liquid system (which is proportional to the volumetric flow rate of the liquid system) is sufficiently low in order to prevent turbulent flow phenomena from occurring in the liquid system (e.g. vortex shedding etc.). For example, a sufficiently low volumetric flow of the liquid system may be provided to thereby provide a laminar flow of the liquid system. For example, the volumetric flow of the liquid system may be provided which provides a Reynolds number less than or equal to 2000, or more preferably less than or equal to 1800.

Parameters of the liquid system which may be controlled to provide a laminar flow may include any of: the dimensions of the trough which holds the liquid system (e.g. depth; length; width); the volumetric flow rate of the liquid system; the speed of the fluid (e.g. mean speed); the dynamic viscosity of the liquid system $\mu$; $\nu$ the kinematic viscosity of the fluid, the density of the fluid $\rho$.

Herein the term aqueous phase refers to any liquid comprising water.

Herein the term lipid monolayer may refer to a single layer of lipid molecules arranged on a surface of an aqueous phase wherein a hydrophilic end of each of the lipid molecules is disposed in the aqueous phase to thereby provide a layer of lipid molecules orientated in a like manner.

Herein the term lipid monolayer may refer to a single layer of lipid molecules arranged on a surface of an aqueous phase wherein a hydrophilic end of each of the lipid molecules is disposed in the aqueous phase to thereby provide a layer of lipid molecules orientated in a like manner.

The chemical constituents (e.g. the species) and/or properties of the lipid monolayer and the bulk liquid phase may be known and used to infer the chemical constituents and/or properties of the test substance based on parameters of the wave.

In examples the position of a surface wave may have a direct effect on the surface pressure at a given point on the surface e.g. as the surface wave propagates across the surface the surface pressure at a given point varies in response to changes in position at that point on the surface.

A flowing liquid system may be a free stream. A free stream refers to a liquid which does not need to be held in a container. A free stream may be a laminar stream that comes out of a tap and measurements can be made on the surface of said from stream.

In examples, the liquid system comprises a spherical blob which floats in zero gravity or a microgravity environment.

Herein the position of the surface of the liquid system at a given point on the surface as a function of time when a surface wave propagates across the surface may refer to the displacement (i.e. from an equilibrium position) of a notional liquid particle on the surface of the liquid system as a function of time.

The reference indication and the test indication may each be vector quantities (e.g. feature vectors). The difference measure may also a vector quantity with the same vector properties as the test indication and the reference indication. The difference measure may represent the Euclidean distance (i.e. in the vector space of the indications) between the test indication and the reference indication.

In examples, an indication database may be provided wherein each entry of the database comprises an indication and a label identifying a property of the substance used to generate the indication. In such examples, an analytical method is provided comprising: obtaining a test indication (e.g. by contacting a surface of a liquid system with a test substance to thereby generate a surface wave on the surface of the liquid system); determining a property of the test substance based on the test indication (e.g. by comparing the test indication to the indication database).

A difference measure can be generated by contacting the surface of a liquid system simultaneously with a reference substance and a test substance. The generated waves combine (e.g. interfere) to provide a combined wave. A difference measure may be generated based on a measurement of the combined wave.

In examples wherein the liquid system does not have time to equilibrate, standing wave patterns may emerge (due to interference of multiple waves being excited) on the surface of the liquid system, or alternatively the lipid may organise into a non-equilibrium steady state due to being continuously driven. The general data acquisition as discussed above still covers this as now till the system is being bombarded test substance of one kind, one kind of steady state spatial pattern (standing wave or lipid organization) may exist, and when the test substance changes, the pattern also changes. The change in pattern is captured by the change in concatenated vector. The physics of a liquid system driven so as to be in a non-equilibrium state is described in J. M. Gold et al. Self-organized novelty detection in driven spin glasses arXiv: 1911.07216.

To compare a stored difference measure with an experimental difference measure a computer may calculate: a Euclidian distance between the two measures; calculate a dot product between the two difference measures (if they are vector quantities). Such comparisons may take place when a quality check is required.

An aspect of the disclosure provides a method of generating a chromatagram from a liquid eluate provided from a chromatography column, the method comprising:

contacting the surface of a liquid system with the eluate to generate a surface wave on the surface of the liquid system,
determining, based on the surface wave, an indication of an analyte present in the eluate;
generating the chromatagram based on said indication.

The surface wave may comprise a Lucassen wave.

The method may comprise determining a parameter of the surface wave. The method may comprise determining an indication of an analyte present in the eluate based on the parameter of the surface wave.

The method may comprise sensing the surface wave using a detector. For example, the detector may comprise a transducer for sensing the surface wave. The transducer may be configured for sensing displacement of the surface of the liquid system. Examples include a contact transducer for example an electrical or mechanical transducer (e.g. a Wilhelmy balance) and a non-contact transducer such as an optical sensor which may for example comprise a light source and a light detector as described herein. The detector may be configured to detect a parameter of the surface wave in the liquid system generated by the eluate.

The detector (e.g. transducer) may have a sensitivity to the presence of Lucassen waves components in the surface wave.

Determining the indication may comprise determining a feature vector for the surface wave. The method may comprise comparing the feature vector for the surface wave with a reference feature vector e.g. the reference feature vector may be indicative of a reference (known) substance generating a wave in the surface of the liquid system.

The indication may correspond to the concentration of analyte in the eluate

The method may comprise positioning the trough in fixed relation to a conduit arranged to dispense the eluate to the surface of the liquid system held in the trough. The conduit may be a chromatography column. The method may comprise coupling the trough to the conduit (e.g. chromatography column).

The method may comprise providing, as an output signal, data defining the chromatagram.

An aspect of the disclosure provides an apparatus comprising:

a trough for holding a liquid system, wherein the trough is arranged for coupling to a chromatography column such that eluate is provided from the chromatography column to the surface of the liquid system held in the trough to thereby generate a surface wave in the surface of the liquid system; and,
a detector configured for sensing the surface wave and a wave measurement module configured to provide an indication of an analyte present in the eluate based on the surface wave.

The surface wave may comprise a Lucassen wave component.

The detector may be configured to sense a parameter of surface wave. The detector may provide a signal to the wave measurement module indicative of the parameter. The wave measurement module may be configured to provide an indication of an analyte present in the eluate based on the parameter of the surface wave.

For example, the detector may comprise a transducer for sensing the surface wave. The transducer may be configured for sensing displacement of the surface of the liquid system such as a contact transducer for example an electrical or mechanical transducer (e.g. a Wilhelmy balance) or a non-contact transducer such as an optical sensor which may for example comprise a light source and a light detector as described herein.

The detector (e.g. transducer) may have a sensitivity to the presence of Lucassen waves. Determining the indication may comprise determining a feature vector for the surface wave. The method may comprise comparing the feature vector for the surface wave with a reference feature vector e.g. the reference feature vector may be indicative of a reference (known) substance generating a wave in the surface of the liquid system.

The indication may correspond to the concentration of analyte in the eluate

The wave measurement module may be configured to generate a chromatagram based on the indication and/or to provide data defining the chromatagram as an output signal.

The analytical methods of the present disclosure provide methods of characterising a stimulus of a liquid system, the stimulus may comprise a chemical stimulus such as may be delivered by contacting between the surface of the liquid system and a test substance or by an electrical stimulus, such as may be provided by the application of a voltage or current signal to the surface. For example, a chemical stimulus may be provided by a test substance, which may be characterised by determining a property of that test substance. In addition, characterising a chemical stimulus may provide other information about that stimulus including for example information encoded in the response of the flowing liquid system to that stimulus.

Accordingly, an aspect of the disclosure provides a method of using surface waves on a liquid system to characterise a stimulus applied to the liquid system, the method comprises:

obtaining a reference indication, wherein the reference indication is indicative of a reference surface wave generated at a surface of the liquid system by a reference stimulus;
obtaining a test indication, wherein the test indication is indicative of a test surface wave generated at the surface of the liquid system by the stimulus; and characterising the stimulus based on:

the reference indication; and,
the test indication.

Embodiments of the present disclosure comprise data processors configured to determine the test indication by calculating a feature vector for the stimulus based on the surface wave (or waves) associated with that stimulus. Such a feature vector may comprise any one or more of the parameters of the surface wave described herein and/or a time series corresponding to the measured wave itself (e.g. a waveform). A plurality of such vectors may be obtained and concatenated into a matrix of data in which the rows or columns are provided by such vectors. Calculating the feature vector may comprise the data processor performing a dimensionality reduction on that data. Examples of methods used for dimensionality reduction include orthogonalization, singular value decomposition (SVD), and principal component analysis (PCA) and other methods. The reference indication may be based on the same calculations using reference surface wave data.

It can thus be seen that the present disclosure may have broader application than the analysis of test substances but instead may provide analytical methods of signal and data processing.

As explained above, the reference indication may be indicative of a reference surface wave generated at a surface of the liquid system by contacting the surface of a liquid system with the reference substance. The reference indication may be provided as data retrieved from a data storage, such as a computer memory.

The reference indication may be provided in one or more data processing elements configured to perform a data operation based on reference data obtained from analysis of a reference surface wave. For example, the data processing elements may comprise a node of a machine learning (e.g. an ML) network. In examples, one or more data processing elements may be configured to provide a machine learning network, such as a neural network for example a convolutional neural network (e.g. a CNN).

The data processing elements may comprise machine learning trained using training data corresponding to any of the reference indications herein. For example the training data may correspond to surface waves generated at a surface of the liquid system by contacting the surface of a liquid system with at least one reference substance. For example, the training data may be based on a model of the surface wave, such as a numerical model. It will thus be appreciated that the reference indication used to characterise the stimulus may be provided by training data encoded in the nodes an ML network.

The HPLC column and liquid system are arranged so that the one or more test substances exiting the HPLC column contact (e.g. fall onto) the surface of the liquid system.

An aspect of the disclosure provides an analytical apparatus comprising: an HPLC column providing droplets to a trough configured to hold a liquid system; and a detector configured to determine a property of a surface wave in the liquid system generated by the droplets.

The analytical apparatus may comprise a detector configured to detect a parameter of a surface wave in the liquid system generated by the stimulus. For example, the detector may comprise a transducer for sensing the surface wave. The transducer may be configured for sensing displacement of the surface of the liquid system such as a contact transducer for example an electrical or mechanical transducer (e.g. a Wilhelmy balance) or a non-contact transducer such as an optical sensor which may for example comprise a light source and a light detector as described herein.

The apparatus may comprise a flow provider configured to provide a flow of the liquid system from an upstream end of the trough to a downstream end of the trough to thereby provide a flowing liquid system. The flow provider may be configured to provide a laminar flow of the liquid system.

According to some aspects there is provided a method for determining a property of a test substance. The method may comprise first encoding the test substance as a wave through a non-solid medium by chemical excitation before processing the wave through the non-solid medium, wherein the processing modifies one or more features of the wave into one or more processed wave features according to one or more conditions of the non-solid medium. The one or more processed wave features are decoded to determine a test indicator. The test indication may then be compared to a reference indication to determine a property of the test substance.

The test substance may be encoded as a wave through the non-solid medium by chemical excitation by contacting the test substance to the surface of the non-solid medium, thereby generating a wave on the surface of the non-solid medium. According to some aspects, the test substance with an analyte to enhance or inhibit interactions with the non-solid medium before contacting the test substance with the non-solid medium.

The non-solid medium may comprise a bulk non-solid phase. According to some aspects, the bulk non-solid phase comprises a lipid, protein, or other molecule dispersed in the bulk non-solid phase.

The bulk non-solid phase may comprise thermo-fluid properties to distribute the wave as a particular combination of one or more of Lucassen, capillary, gravity, and Rayleigh waves. In another aspect, bulk non-solid phase comprises thermo-fluid properties to store energy in a non-equilibrium state.

The bulk non-solid phase may be in a state of flow, a state of laminar flow, or not in a state of flow according to some aspects. The non-solid medium may comprise a thin film on the bulk non-solid phase, which may be a monolayer of lipids, protein, or other molecules. For example, the thin film may consist essentially of a lipid. For example, the thin film may consist essentially of a protein. The thin film may consist essentially of any other type of molecule. In these and other aspects, the thin film may exhibit an electrical response to mechanical stress and vice versa.

The wave may be processed through the non-solid medium comprises modifying a shape of a trough through which the wave propagates, resulting in the processed wave features having one or more of a controlled dissipation, dispersion, refraction, or reflection according to some aspects. The wave may also be processed through the non-solid medium comprises manipulating one or more thermo-fluid properties of the bulk non-solid phase spatiotemporally to filter or enhance one or more wave modes as the wave propagates across the non-solid medium. In some aspects, thermo-fluid properties of the non-solid medium may be manipulated spatiotemporally by changing the chemical composition of the bulk non-solid with a flow system and/or by a spatial light modulator interacting with the interface photochemically, photothermally, or photomechanically.

The wave may also be processed through the non-solid medium to modify one or more of a frequency, a phase, an amplitude, or other wave modes by modifying one or more features of the bulk non-solid, such as elasticity or compressibility of the surface directly related to wave speed, elasticity of the bulk media, nonlinearity of elasticity, and viscosity.

One or more of the processed wave features may then be detected by an apparatus as a distribution of energy among one or more wave modes of the processed wave features as time series data. According to some aspects, the apparatus may be a piezoelectric device the or a photodetector.

The distribution of energy among one or more wave modes of the processed wave features may then be processed as time series data on a computer to determine the feature of the test substance.

According to some aspects, the reference indication may be retrieved from a database.

According to some aspects, the reference indication may be obtained by first encoding a reference substance as a reference wave through a non-solid medium by chemical excitation. Then, the reference wave is processed through the non-solid medium, wherein the processing modifies one or more features of the reference wave into one or more processed reference wave features according to one or more conditions of the non-solid medium. The one or more processed reference wave features are then decoded to obtain the reference indication.

According to some aspects, the reference substance may be encoded as a wave through a plurality of non-solid medium by chemical excitation, each non-solid medium having a unique bulk non-solid phase or thin film, resulting in a plurality of unique reference indications corresponding to the reference substance.

According to some aspects, the test substance may be encoded as a wave through a plurality of non-solid medium by chemical excitation, each non-solid medium having a unique bulk non-solid phase or thin film, resulting in a plurality of unique test indications corresponding to the test substance, and wherein the plurality of test indications are compared to the plurality of reference indications to identify one or more properties of the test substance.

**Claims**

1. An analytical method using surface waves on a liquid system for determining a property of a test substance, the analytical method comprising:

   obtaining a reference indication, wherein the reference indication is indicative of a reference surface wave generated at a surface of the liquid system by contacting the surface of a liquid system with the reference substance;
   obtaining a test indication, wherein the test indication is indicative of a test surface wave generated at the surface of the liquid system by contacting the surface with the test substance;
   determining a property of the test substance based on:

   the reference indication; and,
   the test indication.

2. The analytical method of claim 1 wherein:
   obtaining the reference indication comprises one of:

   (a) contacting the surface of the liquid system with the reference substance; and,
   (b) retrieving the reference indication from a database.

3. The analytical method of claim 1 or 2 wherein:
   obtaining the test indication comprises:
   contacting the surface of the test system with the test substance.

4. The analytical method of any of the preceding claims wherein:

   determining a property of the test substance based on:

   the reference indication; and,
   the test indication

   comprises:
   determining a difference measure between the reference indication and the test indication.

5. The analytical method of claim 4 wherein the difference measure comprises a Euclidean distance metric.

6. The analytical method of claim 4 or 5 wherein the difference measure comprises a vector quantity.

7. The analytical method of claim 4 5 or 6 wherein the difference measure is determined by a subtraction between the reference indication and the test indication.

8. The analytical method of any of the preceding claims wherein:

   the liquid system comprises a bulk liquid phase, for example wherein
   a thin film is carried on the bulk liquid phase wherein the thin film exhibits an electrical response to mechanical stress and vice versa, for example, piezoelectric properties such as those exhibited by liquid crystal for example wherein the thin film is a monolayer, for example wherein the thin film is a lipid thin film.

9. The analytical method of claim 8 wherein:
   the bulk liquid phase comprises an aqueous solution, for example
   wherein:
   the liquid system comprises a lipid dispersed in the bulk liquid phase.

10. The analytical method of claim 8 or 9 wherein the property of the test substance comprises at least one of:

    (1) the partition coefficient, wherein the partition coefficient is the ratio of the concentration of the test substance and the bulk liquid phase;
    (2) the viscosity of the test substance;
    (3) the charge of the test substance;
    (4) the solubility of the test substance in the liquid system;
    (5) the chemical potential per mol of the test substance;
    (6) the enthalpy of interactions between the test substance and the liquid system;
    (7) the identity of the test substance
    (8) the enthalpy of transition for conformational degrees of freedom of the test substance
    (9) the hydrophobicity of the test substance.

(10) the hydrodynamic radius of the test substance;

(11) the interfacial free energy of the test substance;

(12) the thermodynamic susceptibilities of the test substance.

11. The analytical method of any of the preceding claims, wherein:

performing high-performance liquid chromatography, HPLC, on an analyte comprising a plurality of constituents, wherein one of the constituents is the test substance to thereby:

obtain an HPLC parameter associated with the test substance; and,
separate the test substance from the other constituents of the analyte;

contacting the surface of the liquid system with the test substance separated from the other constituents of the analyte to generate a test surface wave on the liquid system; and,
determining a property of the test substance based on the HPLC parameter and the test indication.

12. A controller configured to:

obtain a reference indication, wherein the reference indication is indicative of a reference surface wave generated at a surface of the liquid system by contacting the surface of a liquid system with the reference substance;
obtain a test indication, wherein the test indication is indicative of a test surface wave generated at the surface of the liquid system by contacting the surface with the test substance;
determine a property of the test substance based on:

the reference indication; and,
the test indication.

13. The controller of claim 11, wherein the controller is configured to obtain the reference indication by retrieving it from data storage.

14. A computer program product configured to program a controller to perform the method of any of claims 1 to 9.

**Patentansprüche**

1. Ein analytisches Verfahren unter Verwendung von Oberflächenwellen an einem Flüssigkeitssystem zur Bestimmung einer Eigenschaft einer Prüfsubstanz, wobei das analytische Verfahren Folgendes umfasst:

Erhalten eines Bezugsanzeigewertes, wobei der Bezugsanzeigewert eine Bezugsoberflächenwelle anzeigt, die auf einer Oberfläche des Flüssigkeitssystems durch In-Kontakt-Bringen der Oberfläche eines Flüssigkeitssystems mit der Bezugssubstanz erzeugt wird;
Erhalten eines Prüfanzeigewertes, wobei der Prüfanzeigewert eine Prüfoberflächenwelle anzeigt, die an der Oberfläche des Flüssigkeitssystems durch In-Kontakt-Bringen der Oberfläche mit der Prüfsubstanz erzeugt wird;
Bestimmen einer Eigenschaft der Prüfsubstanz basierend auf:

dem Bezugsanzeigewert; und
dem Prüfanzeigewert.

2. Analytisches Verfahren nach Anspruch 1, wobei:
das Erhalten des Bezugsanzeigewertes eines der Folgenden umfasst:

(a) In-Kontakt-Bringen der Oberfläche des Flüssigkeitssystems mit der Bezugssubstanz; und
(b) Abrufen des Bezugsanzeigewertes aus einer Datenbank.

3. Analytisches Verfahren nach Anspruch 1 oder 2, wobei:
das Erhalten des Prüfanzeigewertes Folgendes umfasst:
In-Kontakt-Bringen der Oberfläche des Prüfsystems mit der Prüfsubstanz.

4. Analytisches Verfahren nach einem der vorhergehenden Ansprüche, wobei:

das Bestimmen einer Eigenschaft der Prüfsubstanz basierend auf:

dem Bezugsanzeigewert; und
dem Prüfanzeigewert

Folgendes umfasst:
Bestimmen eines Differenzmaßes zwischen dem Bezugsanzeigewert und dem Prüfanzeigewert.

5. Analytisches Verfahren nach Anspruch 4, wobei das Differenzmaß einen euklidischen Abstandsmesswert umfasst.

6. Analytisches Verfahren nach Anspruch 4 oder 5, wobei das Differenzmaß eine Vektorgröße umfasst.

7. Analytisches Verfahren nach Anspruch 4, 5 oder 6, wobei das Differenzmaß durch eine Subtraktion zwischen dem Bezugsanzeigewert und dem Prüfanzeigewert bestimmt wird.

8. Analytisches Verfahren nach einem der vorhergehenden Ansprüche, wobei:

   das Flüssigkeitssystem eine Massenflüssigphase umfasst, zum Beispiel wobei
   eine Dünnschicht auf der Massenflüssigphase getragen wird, wobei die Dünnschicht ein elektrisches Ansprechen auf mechanische Spannung zeigt und umgekehrt zum Beispiel piezoelektrische Eigenschaften wie die von Flüssigkristall gezeigten zeigt, zum Beispiel wobei
   die Dünnschicht eine Monoschicht ist, zum Beispiel wobei
   die Dünnschicht eine Lipiddünnschicht ist.

9. Analytisches Verfahren nach Anspruch 8, wobei:
   die Massenflüssigphase eine wässrige Lösung umfasst, zum Beispiel wobei:
   das Flüssigkeitssystem ein in der Massenflüssigphase dispergiertes Lipid umfasst.

10. Analytisches Verfahren nach Anspruch 8 oder 9, wobei die Eigenschaft der Prüfsubstanz mindestens eines der Folgenden umfasst:

    (1) den Verteilungskoeffizienten, wobei der Verteilungskoeffizient das Verhältnis der Konzentration der Prüfsubstanz und der Massenflüssigphase ist;
    (2) die Viskosität der Prüfsubstanz;
    (3) die Ladung der Prüfsubstanz;
    (4) die Löslichkeit der Prüfsubstanz in dem Flüssigkeitssystem;
    (5) das chemische Potential pro mol der Prüfsubstanz;
    (6) die Enthalpie von Wechselwirkungen zwischen der Prüfsubstanz und dem Flüssigkeitssystem;
    (7) die Identität der Prüfsubstanz;
    (8) die Enthalpie des Übergangs für Konformationsfreiheitsgrade der Prüfsubstanz;
    (9) die Hydrophobie der Prüfsubstanz;
    (10) den hydrodynamischen Radius der Prüfsubstanz;
    (11) die freie Grenzflächenenergie der Prüfsubstanz;
    (12) die thermodynamischen Suszeptibilitäten der Prüfsubstanz.

11. Analytisches Verfahren nach einem der vorhergehenden Ansprüche, wobei:

    Durchführen von Hochleistungs-Flüssigchromatographie, HPLC, an einem Analyten, der eine Vielzahl von Bestandteilen umfasst, wobei einer der Bestandteile die Prüfsubstanz ist, um somit:

    einen mit der Prüfsubstanz assoziierten HPLC-Parameter zu erhalten; und
    die Prüfsubstanz von den anderen Bestandteilen des Analyten zu trennen;

    In-Kontakt-Bringen der Oberfläche des Flüssigkeitssystems mit der von den anderen Bestandteilen des Analyten getrennten Prüfsubstanz, um eine Prüfoberflächenwelle auf dem Flüssigkeitssystem zu erzeugen; und
    Bestimmen einer Eigenschaft der Prüfsubstanz basierend auf dem HPLC-Parameter und dem Prüfanzeigewert.

12. Eine Steuereinheit, die zu Folgendem ausgelegt ist:

    Erhalten eines Bezugsanzeigewertes, wobei der Bezugsanzeigewert eine Bezugsoberflächenwelle anzeigt, die auf einer Oberfläche des Flüssigkeitssystems erzeugt wird, indem die Oberfläche eines Flüssigkeitssystems mit der Bezugssubstanz in Kontakt gebracht wird;
    Erhalten eines Prüfanzeigewertes, wobei der Prüfanzeigewert eine Prüfoberflächenwelle anzeigt, die auf der Oberfläche des Flüssigkeitssystems durch In-Kontakt-Bringen der Oberfläche mit der Prüfsubstanz erzeugt wird;
    Bestimmen einer Eigenschaft der Prüfsubstanz basierend auf:

    dem Bezugsanzeigewert; und
    dem Prüfanzeigewert.

13. Steuereinheit nach Anspruch 11, wobei die Steuereinheit dazu ausgelegt ist, den Bezugsanzeigewert durch dessen Abrufen aus einem Datenspeicher zu erhalten.

14. Ein Computerprogrammprodukt, das dazu ausgelegt ist, eine Steuereinheit zu programmieren, um das Verfahren nach einem der Ansprüche 1 bis 9 durchzuführen.

**Revendications**

1. Procédé d'analyse utilisant des ondes de surface sur un système liquide pour déterminer une propriété d'une substance d'essai, le procédé d'analyse comprenant :

   l'obtention d'une indication de référence, l'indication de référence étant indicative d'une onde de surface de référence générée à une surface du système liquide par mise en contact de la surface d'un système liquide avec la substance de référence ;

l'obtention d'une indication d'essai, l'indication d'essai étant indicative d'une onde de surface d'essai générée à la surface du système liquide par mise en contact de la surface avec la substance d'essai ;

la détermination d'une propriété de la substance d'essai à partir de :

l'indication de référence ; et
l'indication d'essai.

2. Procédé d'analyse selon la revendication 1, dans lequel :

l'obtention de l'indication de référence comprend l'une de :

(a) la mise en contact de la surface du système liquide avec la substance de référence ;
et
(b) la récupération de l'indication de référence à partir d'une base de données.

3. Procédé d'analyse selon la revendication 1 ou 2, dans lequel :
l'obtention de l'indication d'essai comprend :
la mise en contact de la surface du système d'essai avec la substance d'essai.

4. Procédé d'analyse selon l'une quelconque des revendications précédentes, dans lequel :
la détermination d'une propriété de la substance d'essai à partir de :

l'indication de référence ; et
l'indication d'essai comprend :
la détermination d'une mesure de différence entre l'indication de référence et l'indication d'essai.

5. Procédé d'analyse selon la revendication 4, dans lequel la mesure de différence comprend une mesure de distance euclidienne.

6. Procédé d'analyse selon la revendication 4 ou 5, dans lequel la mesure de différence comprend une grandeur vectorielle.

7. Procédé d'analyse selon la revendication 4, 5 ou 6, dans lequel la mesure de différence est déterminée par une soustraction entre l'indication de référence et l'indication d'essai.

8. Procédé d'analyse selon l'une quelconque des revendications précédentes, dans lequel :

le système liquide comprend une phase liquide en vrac, par exemple dans lequel
un film mince est porté sur la phase liquide en vrac, dans lequel le film mince présente une réponse électrique à une contrainte mécanique et vice versa, par exemple des propriétés piézoélectriques telles que celles présentées par des cristaux liquides, par exemple dans lequel le film mince est une monocouche, par exemple dans lequel
le film mince est un film mince lipidique.

9. Procédé d'analyse selon la revendication 8, dans lequel :
la phase liquide en vrac comprend une solution aqueuse, par exemple dans lequel :
le système liquide comprend un lipide dispersé dans la phase liquide en vrac.

10. Procédé d'analyse selon la revendication 8 ou 9, dans lequel la propriété de la substance d'essai comprend au moins l'un de :

(1) le coefficient de partage, le coefficient de partage étant le rapport entre la concentration de la substance d'essai et la phase liquide en vrac ;
(2) la viscosité de la substance d'essai ;
(3) la charge de la substance d'essai ;
(4) la solubilité de la substance d'essai dans le système liquide ;
(5) le potentiel chimique par mol de la substance d'essai ;
(6) l'enthalpie d'interactions entre la substance d'essai et le système liquide ;
(7) l'identité de la substance d'essai ;
(8) l'enthalpie de transition pour des degrés de liberté conformationnels de la substance d'essai ;
(9) l'hydrophobie de la substance d'essai.
(10) le rayon hydrodynamique de la substance d'essai ;
(11) l'énergie libre interfaciale de la substance d'essai ;
(12) les sensibilités thermodynamiques de la substance d'essai.

11. Procédé d'analyse selon l'une quelconque des revendications précédentes, dans lequel :
la réalisation d'une chromatographie liquide haute performance, HPLC, sur un analyte comprenant une pluralité de constituants, l'un des constituants étant la substance d'essai, pour ainsi :

obtenir un paramètre de HPLC associé à la substance d'essai ; et

séparer la substance d'essai des autres constituants de l'analyte ;

la mise en contact de la surface du système liquide avec la substance d'essai séparée des autres constituants de l'analyte pour générer une onde de surface d'essai sur le système liquide ;

et

la détermination d'une propriété de la substance d'essai à partir du paramètre de HPLC et de l'indication d'essai.

12. Dispositif de commande configuré pour :

obtenir une indication de référence, l'indication de référence étant indicative d'une onde de surface de référence générée à une surface du système liquide par mise en contact de la surface d'un système liquide avec la substance de référence ;

obtenir une indication d'essai, l'indication d'essai étant indicative d'une onde de surface d'essai générée à la surface du système liquide par mise en contact de la surface avec la substance d'essai ;

déterminer une propriété de la substance d'essai à partir de :

l'indication de référence ; et
l'indication d'essai.

13. Dispositif de commande selon la revendication 11, le dispositif de commande étant configuré pour obtenir l'indication de référence en la récupérant à partir d'un stockage de données.

14. Produit sous forme de programme informatique configuré pour programmer un dispositif de commande pour l'exécution du procédé selon l'une quelconque des revendications 1 à 9.

114
112
110
S

B
140
150
154 152
142

100

S
134
132
C

D
F

116
122
120
126
130
C

B

Figure 1A

110
114
112
S
116
116B

116T

122

$H_B$

$H_T$

126

130

134
S

126B

$H_E$

132

Figure 1B

Figure 1C

Figure 2A

501

501L

501D

Water;
Caffeine

Vector calculated for each drop

Caffeine Signature

Figure 2B

Figure 3

Signal acquired for each drop

## Figure 4A

Vector calculated for each drop

## Figure 4B

600

Figure 5

Figure 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 110749528 A

- WO 2019234437 A1

**Non-patent literature cited in the description**

- **JULIAN KAPPLER** ; **SHAMIT SHRIVASTAVA** ; **MATTHIAS F. SCHNEIDER** ; **ROLAND R. NETZ**. Nonlinear fractional waves at elastic interfaces. *Phys. Rev. Fluids*, 20 November 2017, vol. 2, 114804
- **SHRIVASTAVA S** ; **SCHNEIDER MF**. Evidence for two-dimensional solitary sound waves in a lipid controlled interface and its implications for biological signalling. *J. R. Soc. Interface*, 2014, vol. 11, 20140098
- **BERNHARD FICHTL** ; **SHAMIT SHRIVASTAVA** ; **MATTHIAS F. SCHNEIDER**. Protons at the speed of sound: Predicting specific biological signaling from physics. *Nature Scientific Reports*
- **SHAMIT SHRIVASTAVA** ; **ROBIN CLEVELAND** ; **MATTHIAS SCHNEIDER**. On measuring the acoustic state changes in lipid membranes using fluorescent probes. *Soft Matter*, 2018, vol. 14, 9702-9712

- *Prog Biophys Mol Biol*, 28 January 2021, vol. 162, 111-121
- **D. B. TATA** ; **F. DUNN**. Interaction of ultrasound and model membrane systems: analyses and predictions. *J. Phys. Chem.*, 01 April 1992, vol. 96 (8), 3548-3555
- **K. LEUNG**. *J. Phys. Chem. Lett.*, 28 December 2009, vol. 1 (2), 496-499
- **L. CANTU et al.** An interferometric technique to study capillary waves. *Advances in Colloid and Interface Science*, 2017, vol. 247, 23-32
- **J. M. GOLD et al.** Self-organized novelty detection in driven spin glasses. *arXiv: 1911.07216*